# EUROPEAN PATENT SPECIFICATION

(11) **EP 4 424 044 B1**
(45) Date of publication and mention of the grant of the patent: **14.10.2026**
(21) Application number: 22812995.3
(22) Date of filing: 28.10.2022
(51) Int. Cl.: H04W 12/041, H04W 12/043, H04W 12/06, H04L 9/40

(54) **GENERIC BOOTSTRAPPING ARCHITECTURE (GBA) SIGNALING TO INDICATE NEED FOR KEY RENEGOTIATION**
SIGNALISIERUNG EINER GENERISCHEN BOOTSTRAPPING-ARCHITEKTUR (GBA) ZUR ANZEIGE DES BEDARFS AN SCHLÜSSELNEUAUSHANDLUNG
SIGNALISATION D'ARCHITECTURE D'AMORÇAGE GÉNÉRIQUE (GBA) POUR INDIQUER UN BESOIN DE RENÉGOCIATION DE CLÉ

(30) Priority: 31.10.2021 US 202163273997 P; 26.10.2022 US 202218050028
(43) Date of publication of application: 04.09.2024
(73) Proprietor: QUALCOMM INCORPORATED, San Diego, California 92121-1714 (US)
(72) Inventor: ESCOTT, Adrian Edward, San Diego, California 92121-1714 (US); PALANIGOUNDER, Anand, San Diego, California 92121-1714 (US); LEE, Soo Bum, San Diego, California 92121-1714 (US); KIM, Hongil, San Diego, California 92121-1714 (US)
(74) Representative: Reddie & Grose LLP
(86) International application number: PCT/US2022/048150
(87) International publication number: WO 2023/076545

(56) References cited:
- CN-A- 114 726 520
- US-A1- 2013 067 552
- US-A1- 2020 389 788

## Description

### BACKGROUND

**Fifth** Generation (5G) New Radio (NR) and other communication technologies enable ultra-reliable low latency communication with user equipments (UEs) such as wireless devices. One application for such communication systems is the provision of a variety of services to UEs. Some applications and services may employ or may require communication security to provide one or more functions.
US 2020/389788 A1 describes methods and systems for establishing a session key at a communication device.
US 2013/067552 A1 describes system and methods for authentication in secure user plane location systems.

### SUMMARY

The present invention is defined by the appended claims. Further restricted embodiments are provided by the following description. Various aspects include methods performed by a processor of a user equipment (UE) for securing communications. Various aspects may include methods performed by a processor of a UE for providing a generic bootstrapping architecture (GBA) to support key renegotiation. Various aspects may include methods for supporting pre-shared key (PSK) renegotiation performed by a processor of a UE.

Further aspects include a network device having a processor configured to perform one or more operations of any of the methods summarized above. Further aspects include processing devices for use in a network device configured with processor-executable instructions to perform operations of any of the methods summarized above. Further aspects include a non-transitory processor-readable storage medium having stored thereon processor-executable instructions configured to cause a processor of a network device to perform operations of any of the methods summarized above. Further aspects include a network device having means for performing functions of any of the methods summarized above. Further aspects include a system on chip for use in a network device and that includes a processor configured to perform one or more operations of any of the methods summarized above.

### BRIEF DESCRIPTION OF THE DRAWINGS

The accompanying drawings, which are incorporated herein and constitute part of this specification, illustrate exemplary embodiments, and together with the general description given above and the detailed description given below, serve to explain the features of the various embodiments.
FIG. 1A is a system block diagram illustrating an example communications system suitable for implementing any of the various embodiments.
FIG. 1B is a system block diagram illustrating an example disaggregated base station architecture for wireless communication systems suitable for implementing any of the various embodiments.
FIG. 2 is a component block diagram illustrating an example computing and wireless modem system suitable for implementing any of the various embodiments.
FIG. 3 is a component block diagram illustrating a software architecture including a radio protocol stack for the user and control planes in wireless communications suitable for implementing any of the various embodiments.
FIG. 4 is a block diagram illustrating an example system for bootstrapping application security suitable for use with various embodiments.
FIG. 5 is a process flow diagram illustrating a method performed by a processor of a UE for supporting PSK renegotiation according to various embodiments.
FIG. 6 is a process flow diagram illustrating a method performed by a processor of a network device for supporting PSK renegotiation according to various embodiments.
FIG. 7 is a component block diagram of a network device suitable for use with various embodiments.
FIG. 8 is a component block diagram of a UE suitable for use with various embodiments.

### DETAILED DESCRIPTION

Various embodiments will be described in detail with reference to the accompanying drawings. Wherever possible, the same reference numbers will be used throughout the drawings to refer to the same or like parts. References made to particular examples and implementations are for illustrative purposes, and are not intended to limit the scope of the claims.

Various embodiments enable pre-shared key (PSK) renegotiation in a generic bootstrapping architecture (GBA). In various embodiments, a user equipment (UE) and a network device, such as a Network Application Function (NAF) server, may communicate information that enables the NAF to indicate when PSK renegotiation is required for a bootstrapping procedure, such as one or more GBA methods, for example, mobile equipment (ME) based GBA (GBA_ME), GBA with Universal Integrated Circuit Card (UICC) based enhancements (GBA_U), Second Generation (2G) GBA, GBA_Digest (a method using session information protocol (SIP) digest credentials for GBA), etc.

A UE may include within a request message sent to a network device, such as an NAF server, PSK identities correlated with PSK namespaces which, if selected by the NAF, indicate that a bootstrapping procedure should be reperformed by the UE to renew session keys before completing a GBA procedure with the NAF. The inclusion in the request message of PSK namespaces indicating PSK renegotiation should be performed by the UE for a bootstrapping procedure may enable the network device, such as an NAF server, to select a bootstrapping procedure to use with the UE to establish a secure communication link. Additionally, the inclusion in the request message of PSK namespaces indicating PSK renegotiation should be performed by the UE for a bootstrapping procedure may indicate that PSK renegotiation needs to be performed simply by returning an indication of the PSK namespace, such as a copy of the PSK namespace itself, an index of the PSK namespace, a position of the PSK namespace in the list of PSK namespaces, etc.

In various embodiments, a network device, such as an NAF server, may indicate to a user equipment (UE) that new bootstrapping is needed by sending a response message including the indication of a PSK renegotiation correlated with the PSK namespace related to a selected bootstrapping procedure, such as a GBA method (e.g., GBA_ME, GBA_U, 2G GBA, GBA_Digest, etc.). The indication of PSK renegotiation correlated with the PSK namespace related to the selected bootstrapping procedure may be an indication of the PSK namespace related to the selected bootstrapping procedure itself. The indication of PSK renegotiation correlated with the PSK namespace related to the selected bootstrapping procedure may be an index of the PSK namespace related to the selected bootstrapping procedure. The indication of PSK renegotiation correlated with the PSK namespace related to the selected bootstrapping procedure may be a position of the PSK namespace related to the selected bootstrapping procedure in a list, such as a list of PSK namespaces.

Including in the reply message the indication of a PSK renegotiation correlated with a PSK namespace related to a bootstrapping procedure may prompt the UE to perform a bootstrapping negotiation to obtain a new bootstrapping transaction identifier (B-TID) and new session key (Ks) for the selected bootstrapping procedure indicated by the indication and then perform the bootstrapping procedure with the network device, such as an NAF server, using the new B-TID and the new Ks to establish secure communications. A network device, such as an NAF server, indicating a need for renegotiation of a key using a particular GBA method to a UE may enable the network device to ensure the Ks used by the UE is fresh. A network device, such as an NAF server, indicating a need for renegotiation of a key using a particular GBA method to a UE may enable the network device to confirm that valid credentials, such as a valid smart card, are available to the UE.

The terms "user equipment" and "UE" are used herein to refer to any one or all of endpoint or user devices, including wireless devices, wireless router devices, wireless appliances, cellular telephones, smartphones, portable computing devices, personal or mobile multi-media players, laptop computers, tablet computers, smartbooks, ultrabooks, palmtop computers, wireless electronic mail receivers, multimedia Internet-enabled cellular telephones, medical devices and equipment, biometric sensors/devices, extended reality (XR) headsets (e.g., virtual reality (VR), mixed reality (MR), or augmented reality (AR) headsets), wearable devices including smart watches, smart clothing, smart glasses, smart wrist bands, smart jewelry (for example, smart rings and smart bracelets), entertainment devices (for example, wireless gaming controllers, music and video players, satellite radios, etc.), wireless-network enabled Internet of Things (IoT) devices including smart meters/sensors, industrial manufacturing equipment, large and small machinery and appliances for home or enterprise use, wireless communication elements within autonomous and semiautonomous vehicles, UEs affixed to or incorporated into various mobile platforms, global positioning system devices, and similar electronic devices that include a memory, wireless communication components and a programmable processor.

The term "system on chip" (SOC) is used herein to refer to a single integrated circuit (IC) chip that contains multiple resources or processors integrated on a single substrate. A single SOC may contain circuitry for digital, analog, mixed-signal, and radio-frequency functions. A single SOC also may include any number of general purpose or specialized processors (digital signal processors, modem processors, video processors, etc.), memory blocks (such as ROM, RAM, Flash, etc.), and resources (such as timers, voltage regulators, oscillators, etc.). SOCs also may include software for controlling the integrated resources and processors, as well as for controlling peripheral devices.

The term "system in a package" (SIP) may be used herein to refer to a single module or package that contains multiple resources, computational units, cores or processors on two or more IC chips, substrates, or SOCs. For example, a SIP may include a single substrate on which multiple IC chips or semiconductor dies are stacked in a vertical configuration. Similarly, the SIP may include one or more multichip modules (MCMs) on which multiple ICs or semiconductor dies are packaged into a unifying substrate. A SIP also may include multiple independent SOCs coupled together via high speed communication circuitry and packaged in close proximity, such as on a single motherboard or in a single wireless device. The proximity of the SOCs facilitates high speed communications and the sharing of memory and resources.

As used herein, the terms "network," "system," "wireless network," "cellular network," and "wireless communication network" may interchangeably refer to a portion or all of a wireless network of a carrier associated with a wireless device and/or subscription on a wireless device. The techniques described herein may be used for various wireless communication networks, such as Code Division Multiple Access (CDMA), time division multiple access (TDMA), FDMA, orthogonal FDMA (OFDMA), single carrier FDMA (SC-FDMA) and other networks. In general, any number of wireless networks may be deployed in a given geographic area. Each wireless network may support at least one radio access technology, which may operate on one or more frequency or range of frequencies. For example, a CDMA network may implement Universal Terrestrial Radio Access (UTRA) (including Wideband Code Division Multiple Access (WCDMA) standards), CDMA2000 (including IS-2000, IS-95 and/or IS-856 standards), etc. In another example, a TDMA network may implement GSM Enhanced Data rates for GSM Evolution (EDGE). In another example, an OFDMA network may implement Evolved UTRA (E-UTRA) (including LTE standards), Institute of Electrical and Electronics Engineers (IEEE) 802.11 (Wi-Fi), IEEE 802.16 (WiMAX), IEEE 802.20, Flash-OFDM^{®}, etc. Reference may be made to wireless networks that use LTE standards, and therefore the terms "Evolved Universal Terrestrial Radio Access," "E-UTRAN" and "eNodeB" may also be used interchangeably herein to refer to a wireless network. However, such references are provided merely as examples, and are not intended to exclude wireless networks that use other communication standards. For example, while various Third Generation (3G) systems, Fourth Generation (4G) systems, and Fifth Generation (5G) systems are discussed herein, those systems are referenced merely as examples and future generation systems (e.g., sixth generation (6G) or higher systems) may be substituted in the various examples.

Some applications and services may employ, or may require, communication security to provide one or more functions. For example the Generic Bootstrapping Architecture (GBA) may provide a mechanism that uses a protocol such as third generation partnership project (3GPP) Authentication and Key Agreement (AKA) to configure a shared secret between a UE and a network device. In some approaches, the UE and the network device share a single shared secret for all communications by all services and applications.

Various embodiments include methods and computing devices configured to perform the methods for securing communications between a UE and a network device by providing a GBA to support key renegotiation. Various embodiments include methods and computing devices configured to secure communications between a UE and a network device that support PSK renegotiation.

GBA bootstrapping procedures enable using mobile subscription security material to derive keys for UEs to provide application-level security. For example, in a GBA architecture, a bootstrapping server function (BSF) may communicate with a UE over a Ub interface and an NAF over a Zn interface. As used herein, "Ub" refers to the UE-BSF interface for bootstrapping. As used herein, "Zn" refers to the BSF-NAF interface for Generic Authentication Architecture (GAA) applications. The BSF may be a network entity in the operator's network that authenticates the UE and provides a key to the NAF. The NAF may be the application that the UE is, or will, attempt to establish secure communications with, such as secure communications according to the Transport Layer Security (TLS) Protocol Version 1.3 (TLS 1.3) as defined in Internet Engineering Task Force (IETF) Request for Comments (RFC) 8446. The BSF may authenticate the UE utilizing a Home Subscriber Server (HSS) which may hold subscriber data allowing UE authentication. In an example bootstrapping procedure, a UE may run a Digest AKA protocol with the BSF. The bootstrapping procedure may result in the UE and the BSF having a bootstrapping transaction identifier (B-TID) and key (Ks) in common. The B-TID may identify the Ks.

After running a bootstrapping procedure with the BSF, a UE may send a B-TID to the NAF in a request message, such as a client-initiated hello message (e.g., as used herein, a ClientHello message). The NAF may request a key from the BSF using the B-TID received from the UE. The BSF may generate an NAF specific key, e.g., as used herein, Ks_NAF, from the Ks generated during the bootstrapping procedure with the UE and send the NAF specific key to the NAF. The derivation of the Ks_NAF may use an NAF identifier (ID) which may be made up of the Fully Qualified Domain Name (FQDN) of the NAF and the Ua security protocol identifier. The Ua security protocol identifier may ensure that different keys are generated for different protocols such that each key has exactly one use. As used herein, "Ua" refers to the UE-NAF interface for GAA application. The FQDN may ensure that the key is unique to the NAF.

Some NAFs may be configured to support bootstrapping renegotiation, e.g., to perform PSK renegotiation. After a UE has already run a bootstrapping procedure with the BSF, the UE may send the initial (or current) B-TID to the NAF. The NAF may forward the B-TID to the BSF to obtain the Ks for conducting secure communications with the UE. However, in some situations the NAF may determine that the keys received from the BSF are not appropriate for use in a secure communication. For example, the NAF may determine the B-TID to be overaged, the NAF may be configured to always initially request renegotiation, or the NAF may determine that bootstrapping renegotiation is required for any other reason. In conventional systems, especially conventional systems employing TLS 1.3 using GBA keys, there is no way for the NAF to indicate to the UE the need for new keys, and thus the need for the UE to obtain updated keys from the BSF.

Various embodiments provide a mechanism by which the NAF may efficiently inform the UE that PSK renegotiation is required before the UE uses GBA procedures to establish a secure communication link with the NAF. In various embodiments, a UE may indicate to a network device, such as an NAF, that PSK renegotiation is supported by the UE for one or more bootstrapping procedures, such as one or more GBA methods (e.g., GBA_ME, GBA_U, 2G GBA, GBA_Digest, etc.) and/or one or more other bootstrapping procedures, by including in the listed bootstrapping procedures added procedures that correlate to the supported procedures with a need to refresh the key. In other words, for at least one (or each) of the supported bootstrapping procedures, a corresponding bootstrapping renegotiation procedure may be included in the list of (supported) bootstrapping procedures.

In various embodiments, the NAF may refer to the list of bootstrapping procedures to inform the UE about both the selected bootstrapping procedure and the need for the UE to refresh the key before performing operations to establish the secure communication link with the NAF. For example, the NAF may select a bootstrapping procedure by name, the NAF may select an index value of the bootstrapping procedure, or the NAF may select the position of the bootstrapping procedure in the list to indicate a selected bootstrapping method. This enables the network device, such as an NAF server, to indicate to a UE that the NAF wants to use a selected bootstrapping method and that the UE needs to refresh the key for that method simply by providing the corresponding indication (e.g., the namespace of the procedure indicating the need for new keys correlated to the selected bootstrapping method, the index number of the procedure indicating the need for new keys correlated to the selected bootstrapping method, or the position in the list of the procedure indicating the need for new keys correlated to the selected bootstrapping method).

In various embodiments, a UE may send a request message to a network device, such as an NAF server, including the PSK namespaces that indicate supported bootstrapping procedures along with the associated B-TIDs and (correlated) PSK namespaces indicating PSK renegotiation for the respective supported bootstrapping procedure. The inclusion of an (additional or correlated) PSK namespace and the B-TID may enable the network device, such as an NAF server, to select a bootstrapping procedure for PSK renegotiation to use with the UE and also indicate that the UE needs to renegotiate keys so that a fresh key is used for the selected bootstrapping procedure.

In various embodiments, a network device, such as an NAF server, may indicate to the UE that new bootstrapping is needed by sending a response message including an indication of a PSK renegotiation correlated with (or corresponding to) a PSK namespace related to the selected bootstrapping procedure, such as a GBA method (e.g., GBA_ME, GBA_U, 2G GBA, GBA_Digest, etc.). For example, the indication may be the PSK namespace itself, an index of the PSK namespace, or the position of the PSK namespace in a list. Indicating the PSK renegotiation correlated with a PSK namespace related to the selected bootstrapping procedure may enable the UE to perform the bootstrapping procedure indicated and obtain a new B-TID and new session key (Ks) with which to establish secure communications with the network device.

In various embodiments, a UE may indicate an (correlated) PSK-identity for each supported GBA method to indicate renegotiation for that GBA method. For example, when the PSK-identity (or correlated PSK namespace) "3GPP-bootstrapping" is indicated by the UE as supported, the indication "3GPP-bootstrapping-renegotiation" may be included as a correlated PSK-identity indicating that a new session key (Ks) is required for bootstrapping using the "3GPP-bootstrapping" method. Similar correlated PSK-identities (or namespaces) may be included for other GBA methods.

In embodiments in which more than one GBA method is indicated as supported by a UE for bootstrapping renegotiation, a GBA method different than was originally used for a prior bootstrapping procedure (e.g., an initial bootstrapping procedure, a most recent bootstrapping procedure, etc.) may be available for bootstrapping renegotiation. The UE may indicate such one or more different GBA methods than were originally used for the prior bootstrapping procedure by providing indications of such additional (or correlated) PSK-identities (or correlated PSK namespaces) for the one or more different GBA methods than were originally used for the prior bootstrapping procedure in addition to the indication of the PSK-identity (or PSK namespace) for the originally used prior bootstrapping procedure in the request message sent to NAF.

In various embodiments, the NAF may select an indication of an additional (or correlated) PSK-identity (e.g., the additional PSK-identity itself, the index of the additional PSK-identity, the position of the additional PSK-identity in a list, etc.), such as the correlated PSK-identity (e.g., "3GPP-bootstrapping-renegotiation"), to indicate a new bootstrapping run is needed to use this particular selected GBA method of keying (e.g., to use "3GPP-bootstrapping"). As the selected GBA method of keying may be different than was originally used for a prior bootstrapping procedure (e.g., an initial bootstrapping procedure, a most recent bootstrapping procedure, etc.), a new bootstrapping run by the UE with the BSF may be needed to obtain a fresh session key for use in the selected GBA method. The network device, such as the NAF, may send a response message, such as a server-initiated hello message (referred to herein as a ServerHello Message), to the UE including the indication (e.g., namespace, index, position, etc.) of the additional PSK-identity, such as the correlated PSK-identity (e.g., "3GPP-bootstrapping-renegotiation"), to indicate that a new bootstrapping run by the UE with the BSF is needed to obtain a fresh session key for use in the selected GBA method of establishing secure communications with the UE (e.g., to use "3GPP-bootstrapping"). In this manner, the network device may send the UE a key identifier that indicates the need for regeneration of a key for use with a selected bootstrapping procedure, such as a particular GBA method, rather than indicating the (fresh) key itself.

In various embodiments, in response to receiving the response message, such as the ServerHello Message, including the indication (e.g., namespace, index, position, etc.) of the additional PSK-identity, such as the correlated PSK-identity (e.g., "3GPP-bootstrapping-renegotiation") to indicate a new bootstrapping run is needed to use this particular GBA method of keying (e.g., to use "3GPP-bootstrapping"), the UE may renegotiate one or more keys with the BSF to obtain a new B-TID and a new session key (Ks) for use in the identified GBA procedure with the network device, such as the NAF server. In various embodiments, the UE may re-send the PSK-identity related to the GBA method and the new B-TID to the network device, such as the NAF server, in a request message requesting establishment of a secure communication session.

In various embodiments, when a UE contacts an NAF by sending a request message for a secure communication session, such as a ClientHello message, the UE may indicate to the NAF that the UE supports TLS with PSK authentication. The UE may indicate support of authentication methods other than PSK in the ClientHello message. The UE may send the hostname of the NAF using a server name indication (such as the server_name extension to the ClientHello message according to TLS extensions). The UE may use a GBA-based shared secret for TLS with PSK authentication by providing the B-TID to the NAF in the ClientHello message. If the UE does not have a valid GBA-based shared secret the UE will first obtain one by running the bootstrapping procedure with the BSF over the Ub reference point.

The PSK identities in the ClientHello may include prefixes indicating the PSK-identity namespace (such as "3GPP-bootstrapping-uicc", "3GPP-bootstrapping", and/or "3GPP-bootstrapping-digest"), and the associated B-TID associated with that bootstrapping method. In various embodiments, for each of these included identifiers (e.g., the PSK-identity namespaces, such as "3GPP-bootstrapping-uicc", "3GPP-bootstrapping", and/or "3GPP-bootstrapping-digest"), an additional PSK-identity namespace may be included to enable the request for fresh session key(s). For example, if PSK-identity namespace "3GPP-bootstrapping-uicc" is included, then a correlated PSK-identity namespace "3GPP-bootstrapping-uicc-renegotiation" may be included; if PSK-identity namespace "3GPP-bootstrapping-digest" is included, then a correlated PSK-identity namespace "3GPP-bootstrapping-digest-renegotiation" may be included; and/or if PSK-identity namespace "3GPP-bootstrapping" is included, then a correlated PSK-identity namespace "3GPP-bootstrapping-renegotiation" may be included. Similarly, correlated actual key PSK-identity namespaces and renegotiation support indicating PSK-identity namespaces pairs may be include for the other authentication methods. The prefix (or namespace) "3GPP-bootstrapping" may be used in the PSK-identity to indicate that the UE accepts that AKA-based Ks_(ext)_NAF is used to establish the TLS session keys. The prefix (or namespace) "3GPP-bootstrapping-uicc" may be used in the PSK-identity to indicate that the UE accepts that Ks_int_NAF is used to establish the TLS sessions keys. The prefix (or namespace) "3GPP-bootstrapping-digest" is used in the PSK-identity to indicate that the UE accepts that GBA_Digest-based Ks_NAF is used to establish the TLS sessions keys. Similarly, the correlated prefixes (or namespaces) using appended "renegotiation" or some other appended indication, may be used in the PSK-identity to indicate renegotiation is supported for the correlated GBA method. The ClientHello message can include prefixes for the authentication methods the UE supports.

In various embodiments, a network device, such as an NAF, may determine whether or not to have a UE perform a new bootstrapping procedure for a particular method. In response to the network device determining that the UE should perform a new bootstrapping to obtain a fresh session key for a particular GBA method, the network device may return the indication (e.g., namespace, index, position, etc.) of the renegotiation of the selected PSK-identity (or bootstrapping procedure) in the ServerHello message replying to the UE. In response to receiving the indication (e.g., namespace, index, position, etc.) of the renegotiation of the selected PSK-identity (or bootstrapping procedure), the UE may treat this ServerHello message as a request to retry bootstrapping operations (for example as a HelloRetryRequest) and perform a new bootstrapping operation with the BSF to obtain a fresh session key (Ks) for the indicated bootstrapping method as well as a fresh B-TID. Once the bootstrapping is completed, the UE may send a new ClientHello message to the NAF including only the PSK-identity namespace of the chosen bootstrapping method and the new B-TID. If the NAF is willing to establish a TLS tunnel using PSK authentication (in response to either the original ClientHello or the one sent after a fresh bootstrapping), the NAF may select one of the PSK-identities and indicate the selected PSK-identity in the ServerHello message, for example by indicating the namespace, index, or position in a list of the selected PSK-identity. After the UE has sent a Finished message and the NAF has received the Finished message from the UE, the UE and NAF may use the application-level communication through the TLS tunnel using the fresh session key.

Various embodiments enable the UE and the network device to agree on a unique key for each application or service for the UE without exchanging private or secure information, such as a private key. As a result, various embodiments improve the operation of the UE, the network device, and the communication system by improving the security of communications between the UE and the network device.

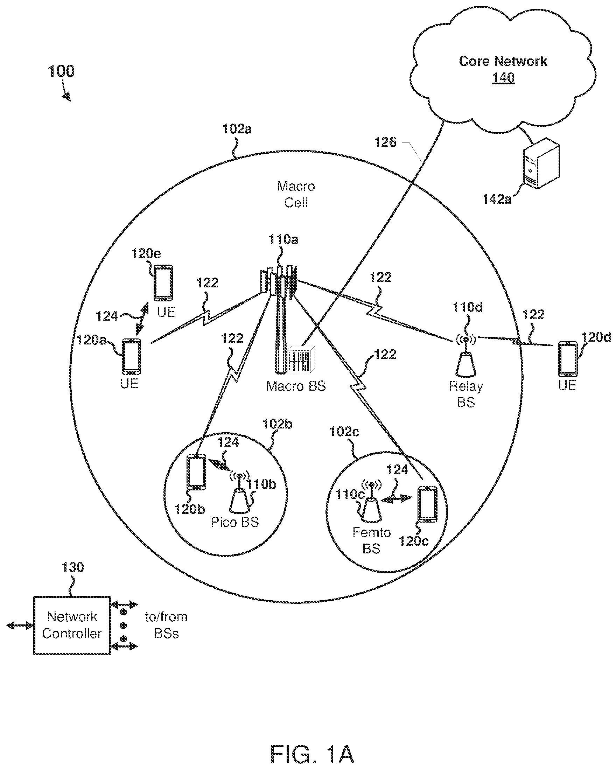

FIG. 1A is a system block diagram illustrating an example communications system 100. The communications system 100 may be a 5G New Radio (NR) network, or any other suitable network such as a Long Term Evolution (LTE) network. While FIG. 1A illustrates a 5G network, later generation networks may include the same or similar elements. Therefore, the reference to a 5G network and 5G network elements in the following descriptions is for illustrative purposes and is not intended to be limiting.

The communications system 100 may include a heterogeneous network architecture that includes a core network 140 and a variety of UEs (illustrated as UEs 120a-120e in FIG. 1A). The communications system 100 also may include various network devices 142a, such as various network servers including NAF servers, BSFs, HSSs, Subscriber Locator Function (SLF) servers, etc. The communications system 100 also may include a number of base stations (illustrated as the BS 110a, the BS 110b, the BS 110c, and the BS 110d) and other network entities. A base station is an entity that communicates with UEs, and also may be referred to as a Node B, an LTE Evolved nodeB (eNodeB or eNB), an access point (AP), a radio head, a transmit receive point (TRP), a New Radio base station (NR BS), a 5G NodeB (NB), a Next Generation NodeB (gNodeB or gNB), or the like. Each base station may provide communication coverage for a particular geographic area. In 3GPP, the term "cell" can refer to a coverage area of a base station, a base station subsystem serving this coverage area, or a combination thereof, depending on the context in which the term is used. The core network 140 may be any type of core network, such as an LTE core network (e.g., an Evolved Packet Core (EPC) network), 5G core network, etc.

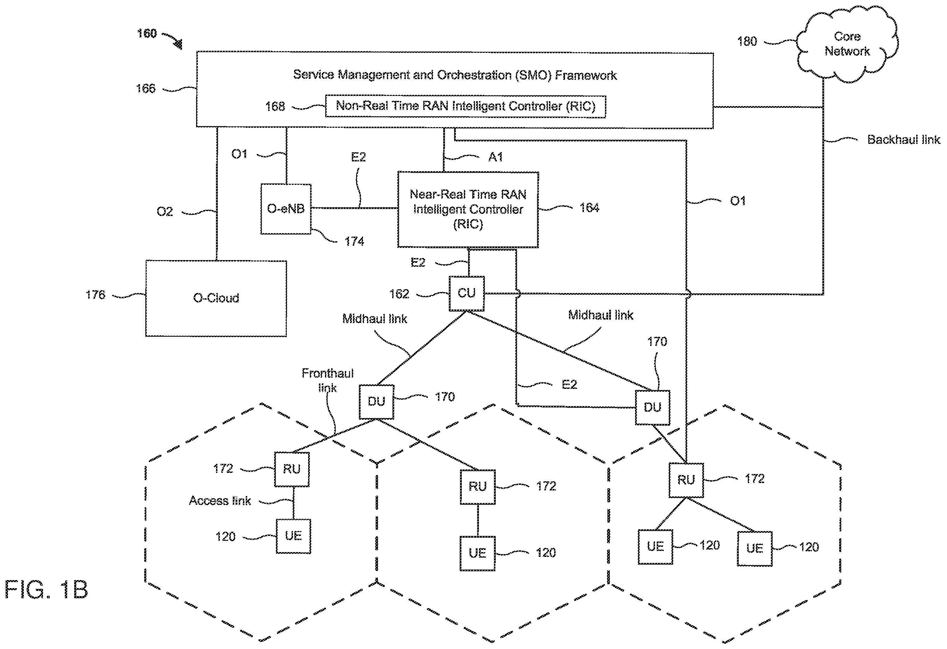

A base station 110a-110d may provide communication coverage for a macro cell, a pico cell, a femto cell, another type of cell, or a combination thereof. A macro cell may cover a relatively large geographic area (for example, several kilometers in radius) and may allow unrestricted access by UEs with a service subscription. A pico cell may cover a relatively small geographic area and may allow unrestricted access by UEs with service subscription. A femto cell may cover a relatively small geographic area (for example, a home) and may allow restricted access by UEs having association with the femto cell (for example, UEs in a closed subscriber group (CSG)). A base station for a macro cell may be referred to as a macro BS. A base station for a pico cell may be referred to as a pico BS. A base station for a femto cell may be referred to as a femto BS or a home BS. In the example illustrated in FIG. 1, a base station 110a may be a macro BS for a macro cell 102a, a base station 110b may be a pico BS for a pico cell 102b, and a base station 110c may be a femto BS for a femto cell 102c. A base station 110a-110d may support one or multiple (for example, three) cells. The terms "eNB", "base station", "NR BS", "gNB", "TRP", "AP", "node B", "5G NB", and "cell" may be used interchangeably herein.

In some examples, a cell may not be stationary, and the geographic area of the cell may move according to the location of a mobile base station. In some examples, the base stations 110a-110d may be interconnected to one another as well as to one or more other base stations or network nodes (not illustrated) in the communications system 100 through various types of backhaul interfaces, such as a direct physical connection, a virtual network, or a combination thereof using any suitable transport network.

The base station 110a-110d may communicate with the core network 140 over a wired or wireless communication link 126. The UEs 120a-120e may communicate with the base station 110a-110d over a wireless communication link 122.

The wired communication link 126 may use a variety of wired networks (such as Ethernet, TV cable, telephony, fiber optic and other forms of physical network connections) that may use one or more wired communication protocols, such as Ethernet, Point-To-Point protocol, High-Level Data Link Control (HDLC), Advanced Data Communication Control Protocol (ADCCP), and Transmission Control Protocol/Internet Protocol (TCP/IP).

The communications system 100 also may include relay stations (such as relay BS 110d). A relay station is an entity that can receive a transmission of data from an upstream station (for example, a base station or a UE) and send a transmission of the data to a downstream station (for example, a UE or a base station). A relay station also may be a wireless device (e.g., a UE) that can relay transmissions for other UEs. In the example illustrated in FIG. 1, a relay station 110d may communicate with macro the base station 110a and the UE 120d in order to facilitate communication between the base station 110a and the UE 120d. A relay station also may be referred to as a relay base station, a relay base station, a relay, etc.

The communications system 100 may be a heterogeneous network that includes base stations of different types, for example, macro base stations, pico base stations, femto base stations, relay base stations, etc. These different types of base stations may have different transmit power levels, different coverage areas, and different impacts on interference in communications system 100. For example, macro base stations may have a high transmit power level (for example, 5 to 40 Watts) whereas pico base stations, femto base stations, and relay base stations may have lower transmit power levels (for example, 0.1 to 2 Watts).

A network controller 130 may couple to a set of base stations and may provide coordination and control for these base stations. The network controller 130 may communicate with the base stations via a backhaul. The base stations also may communicate with one another, for example, directly or indirectly via a wireless or wireline backhaul.

The UEs 120a, 120b, 120c may be dispersed throughout the communications system 100, and each UE may be stationary or mobile. A UE also may be referred to as an access terminal, a terminal, a mobile station, a subscriber unit, a station, wireless device, etc.

A macro base station 110a may communicate with the core network 140 over a wired or wireless communication link 126. The UEs 120a, 120b, 120c may communicate with a base station 110a-110d over a wireless communication link 122.

The wireless communication links 122 and 124 may include a plurality of carrier signals, frequencies, or frequency bands, each of which may include a plurality of logical channels. The wireless communication links 122 and 124 may utilize one or more radio access technologies (RATs). Examples of RATs that may be used in a wireless communication link include 3GPP LTE, 3G, 4G, 5G (such as NR), GSM, Code Division Multiple Access (CDMA), Wideband Code Division Multiple Access (WCDMA), Worldwide Interoperability for Microwave Access (WiMAX), Time Division Multiple Access (TDMA), and other mobile telephony communication technologies cellular RATs. Further examples of RATs that may be used in one or more of the various wireless communication links within the communications system 100 include medium range protocols such as Wi-Fi, LTE-U, LTE-Direct, LAA, MuLTEfire, and relatively short range RATs such as ZigBee, Bluetooth, and Bluetooth Low Energy (LE).

Certain wireless networks (e.g., LTE) utilize orthogonal frequency division multiplexing (OFDM) on the downlink and single-carrier frequency division multiplexing (SC-FDM) on the uplink. OFDM and SC-FDM partition the system bandwidth into multiple (K) orthogonal subcarriers, which are also commonly referred to as tones, bins, etc. Each subcarrier may be modulated with data. In general, modulation symbols are sent in the frequency domain with OFDM and in the time domain with SC-FDM. The spacing between adjacent subcarriers may be fixed, and the total number of subcarriers (K) may be dependent on the system bandwidth. For example, the spacing of the subcarriers may be 15 kHz and the minimum resource allocation (called a "resource block") may be 12 subcarriers (or 180 kHz). Consequently, the nominal Fast File Transfer (FFT) size may be equal to 128, 256, 512, 1024 or 2048 for system bandwidth of 1.25, 2.5, 5, 10 or 20 megahertz (MHz), respectively. The system bandwidth also may be partitioned into subbands. For example, a subband may cover 1.08 MHz (i.e., 6 resource blocks), and there may be 1, 2, 4, 8 or 16 subbands for system bandwidth of 1.25, 2.5, 5, 10 or 20 MHz, respectively.

While descriptions of some implementations may use terminology and examples associated with LTE technologies, some implementations may be applicable to other wireless communications systems, such as a new radio (NR) or 5G network. NR may utilize OFDM with a cyclic prefix (CP) on the uplink (UL) and downlink (DL) and include support for half-duplex operation using time division duplex (TDD). A single component carrier bandwidth of 100 MHz may be supported. NR resource blocks may span 12 sub-carriers with a sub-carrier bandwidth of 75 kHz over a 0.1 millisecond (ms) duration. Each radio frame may consist of 50 subframes with a length of 10 ms. Consequently, each subframe may have a length of 0.2 ms. Each subframe may indicate a link direction (i.e., DL or UL) for data transmission and the link direction for each subframe may be dynamically switched. Each subframe may include DL/UL data as well as DL/UL control data. Beamforming may be supported and beam direction may be dynamically configured. Multiple Input Multiple Output (MIMO) transmissions with precoding also may be supported. MIMO configurations in the DL may support up to eight transmit antennas with multi-layer DL transmissions up to eight streams and up to two streams per UE. Multi-layer transmissions with up to 2 streams per UE may be supported.

Aggregation of multiple cells may be supported with up to eight serving cells. Alternatively, NR may support a different air interface, other than an OFDM-based air interface.

Some UEs may be considered machine-type communication (MTC) or evolved or enhanced machine-type communication (eMTC) UEs. MTC and eMTC UEs include, for example, robots, drones, remote devices, sensors, meters, monitors, location tags, etc., that may communicate with a base station, another device (for example, remote device), or some other entity. A wireless computing platform may provide, for example, connectivity for or to a network (for example, a wide area network such as Internet or a cellular network) via a wired or wireless communication link. Some UEs may be considered Internet-of-Things (IoT) devices or may be implemented as NB-IoT (narrowband internet of things) devices. The UE 120a-120e may be included inside a housing that houses components of the UE 120a-120e, such as processor components, memory components, similar components, or a combination thereof.

In general, any number of communications systems and any number of wireless networks may be deployed in a given geographic area. Each communications system and wireless network may support a particular radio access technology (RAT) and may operate on one or more frequencies. A RAT also may be referred to as a radio technology, an air interface, etc. A frequency also may be referred to as a carrier, a frequency channel, etc. Each frequency may support a single RAT in a given geographic area in order to avoid interference between communications systems of different RATs. In some cases, 4G/LTE and/or 5G/NR RAT networks may be deployed. For example, a 5G non-standalone (NSA) network may utilize both 4G/LTE RAT in the 4G/LTE RAN side of the 5G NSA network and 5G/NR RAT in the 5G/NR RAN side of the 5G NSA network. The 4G/LTE RAN and the 5G/NR RAN may both connect to one another and a 4G/LTE core network (e.g., an evolved packet core (EPC) network) in a 5G NSA network. Other example network configurations may include a 5G standalone (SA) network in which a 5G/NR RAN connects to a 5G core network.

In some implementations, two or more UEs (for example, illustrated as the UE 120a and the UE 120e) may communicate directly using one or more sidelink channels (for example, without using a base station 110a-d as an intermediary to communicate with one another). For example, the UEs 120a-120e may communicate using peer-to-peer (P2P) communications, device-to-device (D2D) communications, a vehicle-to-everything (V2X) protocol (which may include a vehicle-to-vehicle (V2V) protocol, a vehicle-to-infrastructure (V2I) protocol, or similar protocol), a mesh network, or similar networks, or combinations thereof. In this case, the UE 120a-120e may perform scheduling operations, resource selection operations, as well as other operations described elsewhere herein as being performed by the base station 110a-110d.

FIG. 1B is a system block diagram illustrating an example disaggregated base station 160 architecture that may be part of communications systems (e.g., communications system 100), such as a 5G (or later generation) network, suitable for implementing any of various embodiments. With reference to FIGS. 1A and 1B, the disaggregated base station 160 architecture may include one or more central units (CUs) 162 that can communicate directly with a core network 180 via a backhaul link, or indirectly with the core network 180 through one or more disaggregated base station units, such as a Near-Real Time (Near-RT) RAN Intelligent Controller (RIC) 164 via an E2 link, or a Non-Real Time (Non-RT) RIC 168 associated with a Service Management and Orchestration (SMO) Framework 166, or both. A CU 162 may communicate with one or more distributed units (DUs) 170 via respective midhaul links, such as an F1 interface. The DUs 170 may communicate with one or more radio units (RUs) 172 via respective fronthaul links. The RUs 172 may communicate with respective UEs 120 via one or more radio frequency (RF) access links. In some implementations, UEs may be simultaneously served by multiple RUs 172.

Each of the units (i.e., CUs 162, DUs 170, RUs 172), as well as the Near-RT RICs 164, the Non-RT RICs 168 and the SMO Framework 166, may include one or more interfaces or be coupled to one or more interfaces configured to receive or transmit signals, data, or information (collectively, signals) via a wired or wireless transmission medium. Each of the units, or an associated processor or controller providing instructions to the communication interfaces of the units, can be configured to communicate with one or more of the other units via the transmission medium. For example, the units can include a wired interface configured to receive or transmit signals over a wired transmission medium to one or more of the other units. Additionally, the units can include a wireless interface, which may include a receiver, a transmitter or transceiver (such as a radio frequency (RF) transceiver), configured to receive or transmit signals, or both, over a wireless transmission medium to one or more of the other units.

In some aspects, the CU 162 may host one or more higher layer control functions. Such control functions may include the radio resource control (RRC), packet data convergence protocol (PDCP), service data adaptation protocol (SDAP), or the like. Each control function may be implemented with an interface configured to communicate signals with other control functions hosted by the CU 162. The CU 162 may be configured to handle user plane functionality (i.e., Central Unit - User Plane (CU-UP)), control plane functionality (i.e., Central Unit - Control Plane (CU-CP)), or a combination thereof. In some implementations, the CU 162 can be logically split into one or more CU-UP units and one or more CU-CP units. The CU-UP unit can communicate bidirectionally with the CU-CP unit via an interface, such as the E1 interface when implemented in an O-RAN configuration. The CU 162 can be implemented to communicate with DUs 170, as necessary, for network control and signaling.

The DU 170 may correspond to a logical unit that includes one or more base station functions to control the operation of one or more RUs 172. In some aspects, the DU 170 may host one or more of a radio link control (RLC) layer, a medium access control (MAC) layer, and one or more high physical (PHY) layers (such as modules for forward error correction (FEC) encoding and decoding, scrambling, modulation and demodulation, or the like) depending, at least in part, on a functional split, such as those defined by the 3rd Generation Partnership Project (3GPP). In some aspects, the DU 170 may further host one or more low PHY layers. Each layer (or module) may be implemented with an interface configured to communicate signals with other layers (and modules) hosted by the DU 170, or with the control functions hosted by the CU 162.

Lower-layer functionality may be implemented by one or more RUs 172. In some deployments, an RU 172, controlled by a DU 170, may correspond to a logical node that hosts RF processing functions, or low-PHY layer functions (such as performing fast Fourier transform (FFT), inverse FFT (iFFT), digital beamforming, physical random access channel (PRACH) extraction and filtering, or the like), or both, based at least in part on the functional split, such as a lower layer functional split. In such an architecture, the RU(s) 172 may be implemented to handle over the air (OTA) communication with one or more UEs 120. In some implementations, real-time and non-real-time aspects of control and user plane communication with the RU(s) 172 may be controlled by the corresponding DU 170. In some scenarios, this configuration may enable the DU(s) 170 and the CU 162 to be implemented in a cloud-based radio access network (RAN) architecture, such as a vRAN architecture.

The SMO Framework 166 may be configured to support RAN deployment and provisioning of non-virtualized and virtualized network elements. For non-virtualized network elements, the SMO Framework 166 may be configured to support the deployment of dedicated physical resources for RAN coverage requirements, which may be managed via an operations and maintenance interface (such as an O1 interface). For virtualized network elements, the SMO Framework 166 may be configured to interact with a cloud computing platform (such as an open cloud (O-Cloud) 176) to perform network element life cycle management (such as to instantiate virtualized network elements) via a cloud computing platform interface (such as an O2 interface). Such virtualized network elements can include, but are not limited to, CUs 162, DUs 170, RUs 172 and Near-RT RICs 164. In some implementations, the SMO Framework 166 may communicate with a hardware aspect of a 4G RAN, such as an open eNB (O-eNB) 174, via an O1 interface. Additionally, in some implementations, the SMO Framework 166 may communicate directly with one or more RUs 172 via an O1 interface. The SMO Framework 166 also may include a Non-RT RIC 168 configured to support functionality of the SMO Framework 166.

The Non-RT RIC 168 may be configured to include a logical function that enables non-real-time control and optimization of RAN elements and resources, Artificial Intelligence/Machine Learning (AI/ML) workflows including model training and updates, or policy-based guidance of applications/features in the Near-RT RIC 164. The Non-RT RIC 168 may be coupled to or communicate with (such as via an A1 interface) the Near-RT RIC 164. The Near-RT RIC 164 may be configured to include a logical function that enables near-real-time control and optimization of RAN elements and resources via data collection and actions over an interface (such as via an E2 interface) connecting one or more CUs 162, one or more DUs 170, or both, as well as an O-eNB, with the Near-RT RIC 164.

In some implementations, to generate AI/ML models to be deployed in the Near-RT RIC 164, the Non-RT RIC 168 may receive parameters or external enrichment information from external servers. Such information may be utilized by the Near-RT RIC 164 and may be received at the SMO Framework 166 or the Non-RT RIC 168 from non-network data sources or from network functions. In some examples, the Non-RT RIC 168 or the Near-RT RIC 164 may be configured to tune RAN behavior or performance. For example, the Non-RT RIC 168 may monitor long-term trends and patterns for performance and employ AI/ML models to perform corrective actions through the SMO Framework 166 (such as reconfiguration via O1) or via creation of RAN management policies (such as A1 policies).

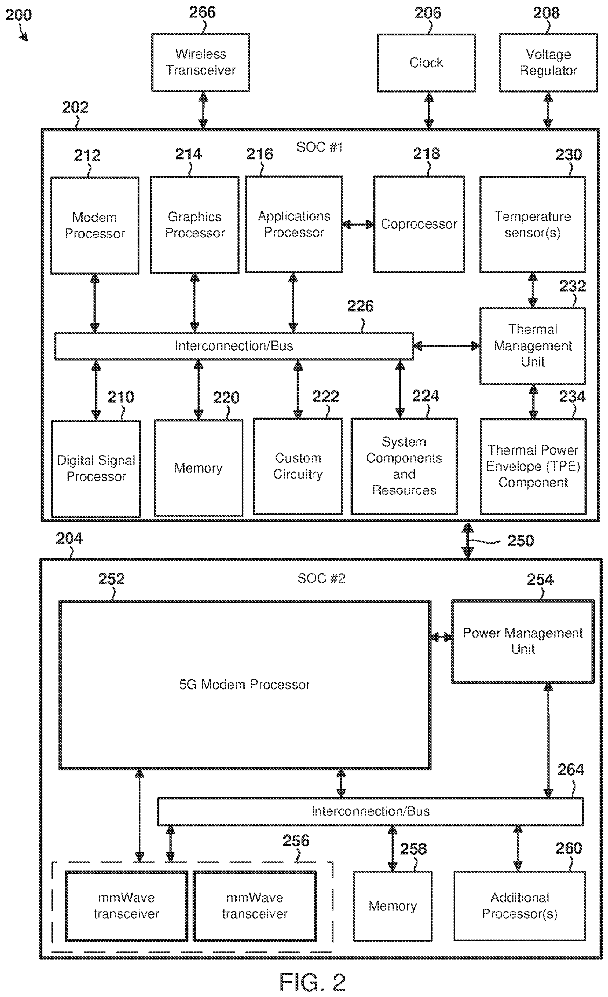

FIG. 2 is a component block diagram illustrating an example computing and wireless modem system 200 suitable for implementing any of the various embodiments. Various embodiments may be implemented on a number of single processor and multiprocessor computer systems, including a system-on-chip (SOC) or system in a package (SIP).

With reference to FIGS. 1A-2, the illustrated example computing system 200 (which may be a SIP in some embodiments) includes a two SOCs 202, 204 coupled to a clock 206, a voltage regulator 208, and a wireless transceiver 266 configured to send and receive wireless communications via an antenna (not shown) to/from UEs, such as a base station 110a. In some implementations, the first SOC 202 may operate as central processing unit (CPU) of the UE that carries out the instructions of software application programs by performing the arithmetic, logical, control and input/output (I/O) operations specified by the instructions. In some implementations, the second SOC 204 may operate as a specialized processing unit. For example, the second SOC 204 may operate as a specialized 5G processing unit responsible for managing high volume, high speed (such as 5 Gbps, etc.), or very high frequency short wave length (such as 28 GHz mmWave spectrum, etc.) communications.

The first SOC 202 may include a digital signal processor (DSP) 210, a modem processor 212, a graphics processor 214, an applications processor 216, one or more coprocessors 218 (such as vector co-processor) connected to one or more of the processors, memory 220, custom circuity 222, system components and resources 224, an interconnection/bus module 226, one or more temperature sensors 230, a thermal management unit 232, and a thermal power envelope (TPE) component 234. The second SOC 204 may include a 5G modem processor 252, a power management unit 254, an interconnection/bus module 264, a plurality of mmWave transceivers 256, memory 258, and various additional processors 260, such as an applications processor, packet processor, etc.

Each processor 210, 212, 214, 216, 218, 252, 260 may include one or more cores, and each processor/core may perform operations independent of the other processors/cores. For example, the first SOC 202 may include a processor that executes a first type of operating system (such as FreeBSD, LINUX, OS X, etc.) and a processor that executes a second type of operating system (such as MICROSOFT WINDOWS 10). In addition, any or all of the processors 210, 212, 214, 216, 218, 252, 260 may be included as part of a processor cluster architecture (such as a synchronous processor cluster architecture, an asynchronous or heterogeneous processor cluster architecture, etc.).

The first and second SOC 202, 204 may include various system components, resources and custom circuitry for managing sensor data, analog-to-digital conversions, wireless data transmissions, and for performing other specialized operations, such as decoding data packets and processing encoded audio and video signals for rendering in a web browser. For example, the system components and resources 224 of the first SOC 202 may include power amplifiers, voltage regulators, oscillators, phase-locked loops, peripheral bridges, data controllers, memory controllers, system controllers, access ports, timers, and other similar components used to support the processors and software clients running on a UE. The system components and resources 224 or custom circuitry 222 also may include circuitry to interface with peripheral devices, such as cameras, electronic displays, wireless communication devices, external memory chips, etc.

The first and second SOC 202, 204 may communicate via interconnection/bus module 250. The various processors 210, 212, 214, 216, 218, may be interconnected to one or more memory elements 220, system components and resources 224, and custom circuitry 222, and a thermal management unit 232 via an interconnection/bus module 226. Similarly, the processor 252 may be interconnected to the power management unit 254, the mmWave transceivers 256, memory 258, and various additional processors 260 via the interconnection/bus module 264. The interconnection/bus module 226, 250, 264 may include an array of reconfigurable logic gates or implement a bus architecture (such as CoreConnect, AMBA, etc.). Communications may be provided by advanced interconnects, such as high-performance networks-on chip (NoCs).

The first or second SOCs 202, 204 may further include an input/output module (not illustrated) for communicating with resources external to the SOC, such as a clock 206 and a voltage regulator 208. Resources external to the SOC (such as clock 206, voltage regulator 208) may be shared by two or more of the internal SOC processors/cores.

In addition to the example SIP 200 discussed above, some implementations may be implemented in a wide variety of computing systems, which may include a single processor, multiple processors, multicore processors, or any combination thereof.

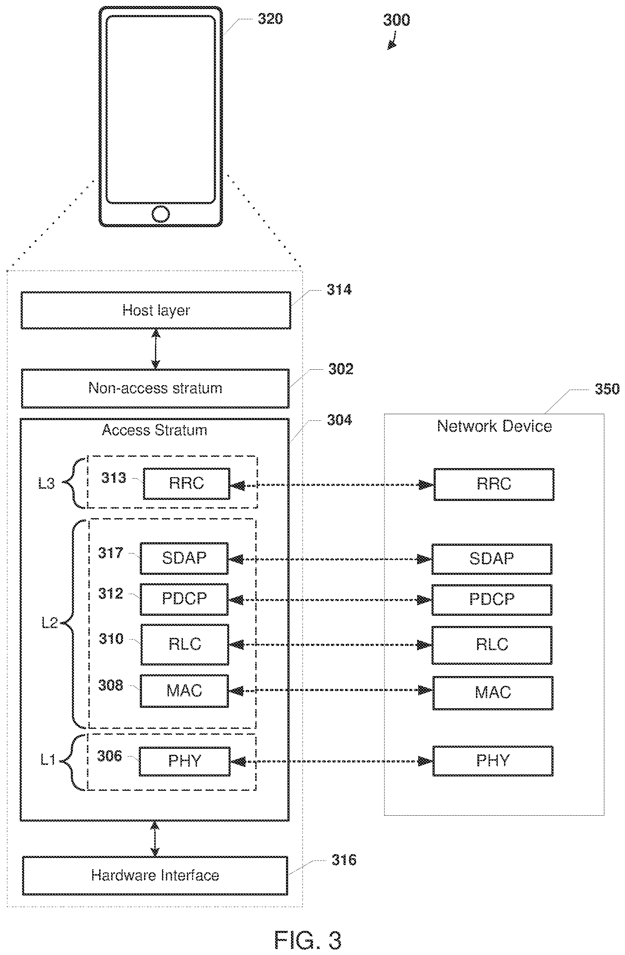

FIG. 3 is a component block diagram illustrating a software architecture 300 including a radio protocol stack for the user and control planes in wireless communications suitable for implementing any of the various embodiments. With reference to FIGS. 1A-3, the UE 320 may implement the software architecture 300 to facilitate communication between a UE 320 (e.g., the UE 120a-120e, 200) and a network device 350 (e.g., network device 142a) of a communication system (e.g., 100). In various embodiments, layers in software architecture 300 may form logical connections with corresponding layers in software of the network device 350. The software architecture 300 may be distributed among one or more processors (e.g., the processors 212, 214, 216, 218, 252, 260). While illustrated with respect to one radio protocol stack, in a multi-SIM (subscriber identity module) UE, the software architecture 300 may include multiple protocol stacks, each of which may be associated with a different SIM (e.g., two protocol stacks associated with two SIMs, respectively, in a dual-SIM wireless communication device). While described below with reference to LTE communication layers, the software architecture 300 may support any of variety of standards and protocols for wireless communications, and/or may include additional protocol stacks that support any of variety of standards and protocols wireless communications.

The software architecture 300 may include a Non-Access Stratum (NAS) 302 and an Access Stratum (AS) 304. The NAS 302 may include functions and protocols to support packet filtering, security management, mobility control, session management, and traffic and signaling between a SOC(s) of the UE (such as SOC(s) 204) and its core network 140. The AS 304 may include functions and protocols that support communication between a SOC(s) (such as SOC(s) 204) and entities of supported access networks (such as a base station). In particular, the AS 304 may include at least three layers (Layer 1, Layer 2, and Layer 3), each of which may contain various sub-layers.

In the user and control planes, Layer 1 (L1) of the AS 304 may be a physical layer (PHY) 306, which may oversee functions that enable transmission or reception over the air interface via a wireless transceiver (e.g., 266). Examples of such physical layer 306 functions may include cyclic redundancy check (CRC) attachment, coding blocks, scrambling and descrambling, modulation and demodulation, signal measurements, MIMO, etc. The physical layer may include various logical channels, including the Physical Downlink Control Channel (PDCCH) and the Physical Downlink Shared Channel (PDSCH).

In the user and control planes, Layer 2 (L2) of the AS 304 may be responsible for the link between the UE 320 and the network device 350 over the physical layer 306. In some implementations, Layer 2 may include a media access control (MAC) sublayer 308, a radio link control (RLC) sublayer 310, a packet data convergence protocol (PDCP) 312 sublayer, and a Service Data Adaptation Protocol (SDAP) 317 sublayer each of which form logical connections terminating at the network device 350.

In the control plane, Layer 3 (L3) of the AS 304 may include a radio resource control (RRC) sublayer 3. While not shown, the software architecture 300 may include additional Layer 3 sublayers, as well as various upper layers above Layer 3. In some implementations, the RRC sublayer 313 may provide functions including broadcasting system information, paging, and establishing and releasing an RRC signaling connection between the UE 320 and the network device 350.

In various embodiments, the SDAP sublayer 317 may provide mapping between Quality of Service (QoS) flows and data radio bearers (DRBs). In some implementations, the PDCP sublayer 312 may provide uplink functions including multiplexing between different radio bearers and logical channels, sequence number addition, handover data handling, integrity protection, ciphering, and header compression. In the downlink, the PDCP sublayer 312 may provide functions that include in-sequence delivery of data packets, duplicate data packet detection, integrity validation, deciphering, and header decompression.

In the uplink, the RLC sublayer 310 may provide segmentation and concatenation of upper layer data packets, retransmission of lost data packets, and Automatic Repeat Request (ARQ). In the downlink, the RLC sublayer 310 functions may include reordering of data packets to compensate for out-of-order reception, reassembly of upper layer data packets, and ARQ.

In the uplink, MAC sublayer 308 may provide functions including multiplexing between logical and transport channels, random access procedure, logical channel priority, and hybrid-ARQ (HARQ) operations. In the downlink, the MAC layer functions may include channel mapping within a cell, de-multiplexing, discontinuous reception (DRX), and HARQ operations.

While the software architecture 300 may provide functions to transmit data through physical media, the software architecture 300 may further include at least one host layer 314 to provide data transfer services to various applications in the UE 320. In some implementations, application-specific functions provided by the at least one host layer 314 may provide an interface between the software architecture and the general purpose processor 206.

In other implementations, the software architecture 300 may include one or more higher logical layers (such as transport, session, presentation, application, etc.) that provide host layer functions. For example, in some implementations, the software architecture 300 may include a network layer (such as Internet protocol (IP) layer) in which a logical connection terminates at a packet data network (PDN) gateway (PGW). In some implementations, the software architecture 300 may include an application layer in which a logical connection terminates at another device (such as end user device, server, etc.). In some implementations, the software architecture 300 may further include in the AS 304 a hardware interface 316 between the physical layer 306 and the communication hardware (such as one or more radio frequency (RF) transceivers).

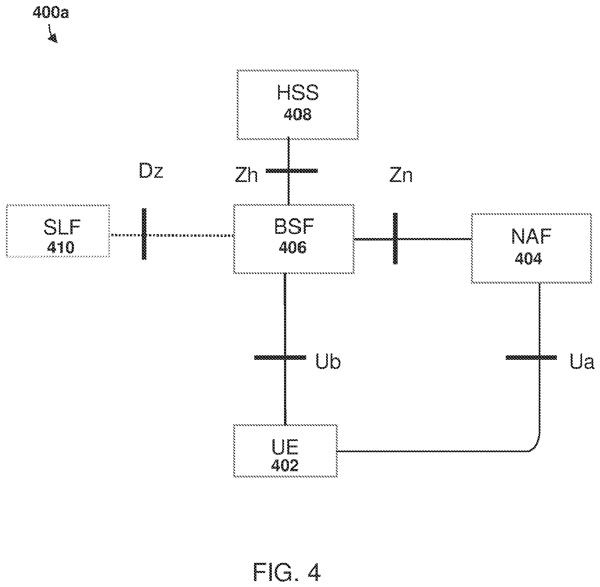

FIG. 4 is a block diagram illustrating an example system 400a for bootstrapping application security suitable for use with various embodiments. With reference to FIGS. 1A-4, the system 400a may include a UE 402, an NAF 404, a BSF 406, a Home Subscriber Server (HSS) 408, and a Subscriber Locator Function (SLF) 410.

In various embodiments, the UE 402 and the BSF 406 may perform authentication operations to authenticate the UE to the BSF. In some embodiments, a negotiation between the BSF 406 and the UE 402 may perform the authentication operations via a Ub interface, and may employ a protocol such as AKA. The UE 402 may communicate with the NAF 404 via a Ua interface. In various embodiments, the UE 402 and the NAF 404 may have no prior security association. The UE 402 may generate a first session key, e.g., Ks_NAF. The NAF 404 may receive a first session key (e.g., Ks_NAF) from the BSF 406 via a Zn interface.

The HSS 408 may serve as a database or other suitable data storage that may store user authentication credentials for the UE 402, such as User Security Settings (USS) (e.g., GBA User Security Settings (GUSS)). In some embodiments, the HSS 408 may map the user authentication credentials to a private identity, such as an IP Multimedia Private Identity (IMPI). The HSS 408 may communicate this and other information to the BSF 406 via a Zh interface. The SLF 410 may store and provide information to identify the HSS 408 that stores information about the UE 402 (i.e., about a specific UE). The BSF 406 and the SLF 410 may communicate over a Dz interface.

In some embodiments, the UE 402 may perform bootstrapping operations with the BSF 406, such as various GBA methods (e.g., GBA_ME, GBA_U, 2G GBA, GBA_Digest, etc.), via a Ub interface. Bootstrapping procedures by the UE 402 may include procedures in which the AKA-based Ks_(ext)_NAF is generated (e.g., GBA based authentication identified by the PSK-identity (namespace) "3GPP-bootstrapping"), procedures in which the Ks_int_NAF is generated (e.g., GBA based authentication identified by the PSK-identity (namespace) "3GPP-bootstrapping-uicc"), and procedures in which the GBA_Digest-based Ks_NAF is generated (e.g., GBA based authentication identified by the PSK-identity (namespace) "3GPP-bootstrapping-digest"). In some embodiments, bootstrapping procedures performed by the UE 402 may be original (or initial) bootstrapping procedures to obtain an initial (or first) B-TID and initial (or first) key (Ks) or may be fresh (e.g., renegotiation related) bootstrapping procedures to obtain a new (or fresh) B-TID and a new (or fresh) Ks.

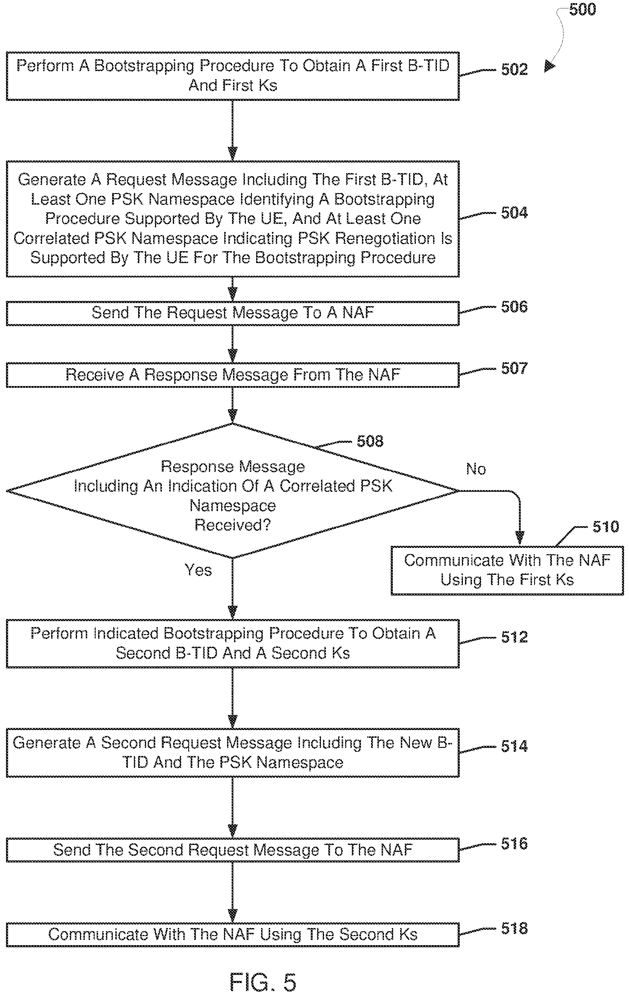

FIG. 5 is a process flow diagram illustrating a method 500 that may be performed by a processor of a UE for supporting PSK renegotiation according to various embodiments. With reference to FIGS. 1A-5, the operations of the method 500 may be performed by a processor (such as the processor 210, 212, 214, 216, 218, 252, 260) of a UE (e.g., 120a-120e, 320, 402). With reference to FIGS. 1A-5, means for performing the operations of method 500 may be one or more processors of a UE (e.g., 120a-120e, 320, 402), such as one or more of the processors 210, 212, 214, 216, 218, 252, 260, and/or one or more transceivers, such as transceivers 256, 266.

In block 502, the processor may perform operations including performing a bootstrapping procedure with the BSF to obtain a first B-TID and a first Ks. For example, the bootstrapping procedure performed may be an original (or initial) bootstrapping procedure to obtain a first B-TID and a first Ks. For example, the operations of block 502 may include bootstrapping and/or other authentication procedures described with reference to FIG. 4. Means for performing the operations of block 502 may include the processor 210, 212, 214, 216, 218, 252, 260 and the transceiver 256, 266.

In block 504, the processor may perform operations including generating a request message including the first B-TID, at least one PSK namespace identifying a bootstrapping procedure supported by the UE (such as the bootstrapping procedure that was used to generate the key (Ks) associated with the first B-TID), and at least one correlated PSK namespace indicating PSK renegotiation is supported by the UE for that bootstrapping procedure. As an example of the operations in block 504, the first request message may include a first bootstrapping transaction identifier (B-TID), a first PSK namespace identifying a first bootstrapping procedure supported by the UE, and a first correlated PSK namespace indicating PSK renegotiation is supported by the UE for the first bootstrapping procedure. Means for performing the operations of block 504 may include the processor 210, 212, 214, 216, 218, 252, 260 and the transceiver 256, 266.

Optionally, the first request message generated in block 504 may include further PSK namespaces identifying further bootstrapping procedures supported by the UE, such as one, two, or more further bootstrapping procedures supported by the UE. Optionally, the first request message generated in block 504 may include further correlated PSK namespaces, such as one, two, or more further correlated PSK namespaces, indicating PSK renegotiation is supported by the UE for any further bootstrapping procedures. Each indicated PSK namespace may have its respective own correlated PSK namespace when PSK renegotiation is supported by the UE for the bootstrapping procedure of the indicated PSK namespace. As an example, the first request message may include a first B-TID, a first PSK namespace identifying a first bootstrapping procedure supported by the UE, a first correlated PSK namespace indicating PSK renegotiation is supported by the UE for the first bootstrapping procedure, a second PSK namespace identifying a second bootstrapping procedure supported by the UE, a second correlated PSK namespace indicating PSK renegotiation is supported by the UE for the second bootstrapping procedure, and a second B-TID associated with that second bootstrapping method.

In some embodiments, the first request message generated in block 504 may be a ClientHello message. The PSK identities in the ClientHello message may include prefixes indicating the respective PSK-identity namespaces and the B-TID. Nonlimiting examples of prefixes include "3GPP-bootstrapping-uicc", "3GPP-bootstrapping", and/or "3GPP-bootstrapping-digest". The prefix "3GPP-bootstrapping" may be used in the PSK-identity to indicate that the UE accepts that AKA-based Ks_(ext)_NAF is used to establish the TLS session keys. The prefix "3GPP-bootstrapping-uicc" may be used in the PSK-identity to indicate that the UE accepts that Ks_int_NAF is used to establish the TLS sessions keys. The prefix "3GPP-bootstrapping-digest" is used in the PSK-identity to indicate that the UE accepts that GBA_Digest-based Ks_NAF is used to establish the TLS sessions keys. In various embodiments, in addition to each of these included identifiers (e.g., the PSK-identity namespaces, such as "3GPP-bootstrapping-uicc", "3GPP-bootstrapping", and/or "3GPP-bootstrapping-digest"), at least one additional (or correlated) PSK-identity namespace may be included to enable the NAF to request a fresh bootstrapping. For example, if PSK-identity namespace "3GPP-bootstrapping-uicc" is included then correlated PSK-identity namespace "3GPP-bootstrapping-uicc-renegotiation" may be included, if PSK-identity namespace "3GPP-bootstrapping-digest" is included then correlated PSK-identity namespace "3GPP-bootstrapping-digest-renegotiation" may be included, and/or if PSK-identity namespace "3GPP-bootstrapping" is included then correlated PSK-identity namespace "3GPP-bootstrapping-renegotiation" may be included. Similarly, correlated actual key PSK-identity namespaces and renegotiation support indicating PSK-identity namespaces pairs may be included for other bootstrapping methods.

In block 506, the processor may perform operations including sending the request message to a network entity, such as an NAF server. For example, the request message may be sent to attempt to establish a TLS tunnel to the network entity. Means for performing the operations of block 506 may include the processor 210, 212, 214, 216, 218, 252, 260 and the transceiver 256, 266.

In block 507, the processor may optionally perform operations including receiving a response message from the network entity, such as the NAF server. For example, the response message may be a ServerHello message from an NAF. Means for performing the operations of block 507 may include the processor 210, 212, 214, 216, 218, 252, 260 and the transceiver 256, 266.

In determination block 508, the processor may perform operations including determining whether an indication of a correlated PSK namespace (correlated to a PSK renegotiation) is included in a received response message. For example, the response message may be a ServerHello message from an NAF. The indication of the correlated PSK namespace may be the correlated PSK namespace itself included in the received response message. The indication of the correlated PSK namespace may be an index of the correlated PSK namespace included in the received response message. The indication of the correlated PSK namespace may be a position of the correlated PSK namespace in a list. The processor may parse the response message to determine whether an indication (e.g., namespace, index, position, etc.) in the response message is an indication of a correlated PSK namespace (correlated to a PSK renegotiation) or is an indication of a selected PSK namespace (a selected supported bootstrapping procedure). The indication (e.g., namespace, index, position, etc.) being an indication of a correlated PSK namespace may indicate that the response message including an indication of a correlated PSK namespace is received. The indication (e.g., namespace, index, position, etc.) being an indication of a selected PSK namespace may indicate a response message including an indication of a correlated PSK namespace was not received. Means for performing the operations of determination block 508 may include the processor 210, 212, 214, 216, 218, 252, 260 and the transceiver 256, 266.

In response to determining that the response message does not include an indication (e.g., namespace, index, position, etc.) of a correlated PSK namespace (i.e., determination block 508 = "No"), the processor may perform operations including communicating with the network elements (e.g., an NAF server) using the first session key Ks in block 510. For example, if the response message includes the index for a PSK (and not a PSK namespace) this may indicate that secure communication may proceed using the current keys. Means for performing the operations of block 510 may include the processor 210, 212, 214, 216, 218, 252, 260 and the transceiver 256, 266.

In response to determining that the response message includes an indication (e.g., namespace, index, position, etc.) of a correlated PSK namespace (i.e., determination block 508 = "Yes"), the processor may perform operations including performing the indicated bootstrapping procedure (i.e., the supported bootstrapping procedure related to the correlated PSK namespace) with the BSF to obtain a second (i.e., new or fresh) B-TID and a second (i.e., new or fresh) Ks in block 512. The processor may perform operations including performing the indicated bootstrapping procedure with the BSF to obtain a second (i.e., new) B-TID and a second (i.e., new) Ks based on receiving the response message. For example, the bootstrapping procedure performed may be a new (or fresh) bootstrapping procedures to obtain a second (i.e., new) B-TID and a second (i.e., new) Ks. For example, the operations of block 512 may include bootstrapping and/or other authentication procedures described with reference to FIG. 4 performed at a subsequent time to thereby result in PSK renegotiation and a second (i.e., new) B-TID and a second (i.e., new) Ks at the UE. Means for performing the operations of block 512 may include the processor 210, 212, 214, 216, 218, 252, 260 and the transceiver 256, 266.

In block 514, the processor may perform operations including generating a second request message including the second (i.e., new) B-TID and the PSK namespace. As an example, the PSK namespace may be the PSK namespace corresponding to the GBA method resulting in the second (i.e., new) B-TID and a second (i.e., new) Ks. As another example, the PSK namespace may be the first PSK namespace identifying the first bootstrapping procedure supported by the UE. As another example, the second request message may be a second ClientHello message. Means for performing the operations of block 504 may include the processor 210, 212, 214, 216, 218, 252, 260 and the wireless transceiver 266.

In block 516, the processor may perform operations including sending the second request message to the network entity (e.g., the NAF server). For example, the second request message may be sent to attempt to establish a TLS tunnel to the NAF. Means for performing the operations of block 516 may include the processor 210, 212, 214, 216, 218, 252, 260 and the transceiver 256, 266.

In block 518, the processor may perform operations including communicating with the network entity (e.g., the NAF server) via a secure communication session using the second (i.e., new) Ks. Means for performing the operations of block 518 may include the processor 210, 212, 214, 216, 218, 252, 260 and the transceiver 256, 266.

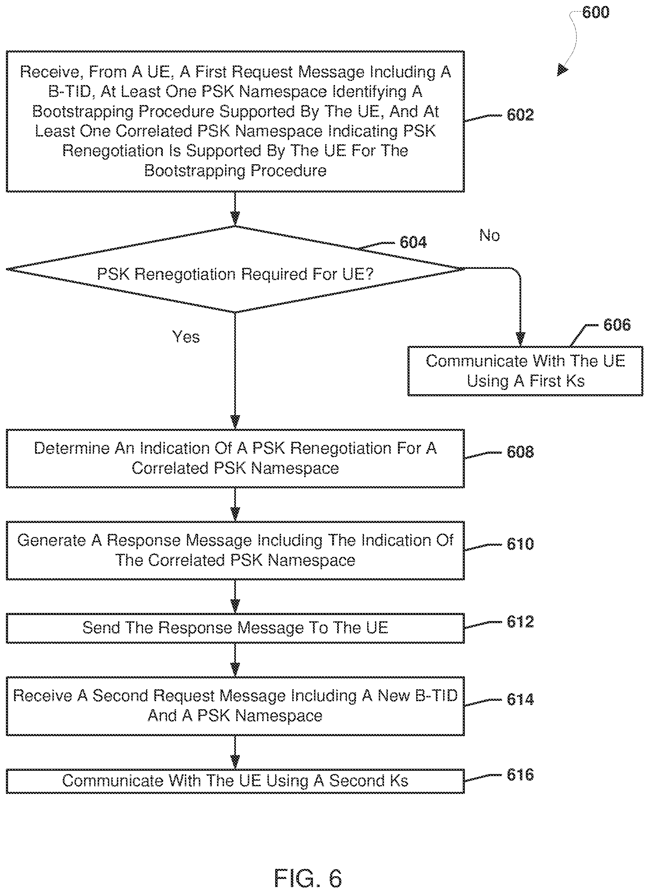

FIG. 6 is a process flow diagram illustrating a method 600 that may be performed by a processor of a network entity (e.g., an NAF server) for securing communications with a UE according to various embodiments. With reference to FIGS. 1A-6, the operations of the method 600 may be performed by a processor (such as the processor 210, 212, 214, 216, 218, 252, 260, 432) of a network device (e.g., 142a, 350). In various embodiments, the operations of the method 600 may be performed in conjunction with the operations of method 500 (FIG. 5). ). With reference to FIGS. 1A-6, means for performing the operations of method 600 may be one or more processors of a network device (e.g., 142a, 350), such as one or more of the processors 210, 212, 214, 216, 218, 252, 260, and/or one or more transceivers, such as transceivers 256, 266.

In block 602, the processor may perform operations including receiving, from the UE, a request message including a B-TID, at least one PSK namespace identifying a bootstrapping procedure supported by the UE, and at least one correlated PSK namespace indicating PSK renegotiation is supported by the UE for the bootstrapping procedure. For example, the first request message may include a first B-TID, a first PSK namespace identifying a first bootstrapping procedure supported by the UE, and a first correlated PSK namespace indicating PSK renegotiation is supported by the UE for the first bootstrapping procedure. Means for performing the operations of block 602 may include the processor 210, 212, 214, 216, 218, 252, 260 and the wireless transceiver 266.

Optionally, the first request message received in block 602 may include further PSK namespaces identifying further bootstrapping procedures supported by the UE, such as one, two, or more further bootstrapping procedures supported by the UE. Optionally, the first request message received in block 602 may include further correlated PSK namespaces, such as one, two, or more further correlated PSK namespaces, indicating PSK renegotiation is supported by the UE for any further bootstrapping procedures. Each indicated PSK namespace may have its respective own correlated PSK namespace when PSK renegotiation is supported by the UE for the bootstrapping procedure of the indicated PSK namespace. As an example, the first request message may include a first B-TID, a first PSK namespace identifying a first bootstrapping procedure supported by the UE, a first correlated PSK namespace indicating PSK renegotiation is supported by the UE for the first bootstrapping procedure, a second PSK namespace identifying a second bootstrapping procedure supported by the UE, and a second correlated PSK namespace indicating PSK renegotiation is supported by the UE for the second bootstrapping procedure.

In some embodiments, the first request message received in block 602 may be a ClientHello message. The PSK identities in the ClientHello may include prefixes indicating the respective PSK-identity namespace, such as "3GPP-bootstrapping-uicc", "3GPP-bootstrapping", and/or "3GPP-bootstrapping-digest", as well as additional (or correlated) PSK-identity namespaces, such as "3GPP-bootstrapping-uicc-renegotiation," "3GPP-bootstrapping-digest-renegotiation," and/or "3GPP-bootstrapping-renegotiation" as described with reference to block 504 of the method 500 (FIG. 5).

In determination block 604, the processor may perform operations including determining whether PSK renegotiation is required for the UE. For example, the processor may determine whether the key associated with the B-TID is overaged to determine whether PSK renegotiation is required (e.g., an overaged key may indicate PSK renegotiation is required, etc.). As another example, the processor may default to requesting PSK renegotiation as a security measure to ensure the UE has access to the security credentials to support renegotiation. Means for performing the operations of block 602 may include the processor 210, 212, 214, 216, 218, 252, 260 and the transceiver 256, 266.

In response to determining that PSK renegotiation is not required (i.e., determination block 604 = "No"), the processor may perform operations including completing GBA procedures to obtain a first session key Ks from the BSF, reply to the UE (e.g., with a ServerHello message) indicating a selected GBA method, and begin communicating with the UE using the first session key Ks in block 606. For example, PSK renegotiation may not be required and communication with the UE may proceed using the current keys. Means for performing the operations of block 606 may include the processor 210, 212, 214, 216, 218, 252, 260 and the transceiver 256, 266.

In response to determining that PSK renegotiation is required (i.e., determination block 604 = "Yes"), the processor may perform operations including determining an indication of a correlated PSK namespace (correlated to a PSK renegotiation) correlated (or corresponding) to a selected PSK namespace in block 608. The indication of a correlated PSK namespace correlated to a selected PSK namespace may be an indication of the correlated PSK namespace itself. The indication of a correlated PSK namespace may be an index of the correlated PSK namespace. The indication of a correlated PSK namespace may be a position of the correlated PSK namespace in a list of PSK namespaces. For example, the NAF may determine an index of a correlated PSK namespace correlated to a bootstrapping procedure (as identified by the selected PSK namespace) the NAF supports and that the UE supports. Means for performing the operations of block 608 may include the processor 210, 212, 214, 216, 218, 252, 260 and the transceiver 256, 266.

In block 610, the processor may perform operations including generating a response message including the indication (e.g., namespace, index, position, etc.) of the correlated PSK namespace. For example, the response message may be a ServerHello message that includes an index of the correlated PSK namespace. Means for performing the operations of block 610 may include the processor 210, 212, 214, 216, 218, 252, 260 and the transceiver 256, 266.

In block 612, the processor may perform operations including sending the response message to the UE. Means for performing the operations of block 612 may include the processor 210, 212, 214, 216, 218, 252, 260 and the transceiver 256, 266.

In block 614, the processor may perform operations including receiving a second request message from the UE. For example, the second request message may be sent to attempt to establish a TLS tunnel to the NAF. As an example, the second request message from the UE may be a ClientHello message that includes the PSK namespace corresponding to the selected GBA method along with a second (i.e., new) B-TID. Means for performing the operations of block 614 may include the processor 210, 212, 214, 216, 218, 252, 260 and the transceiver 256, 266.

In block 616, the processor may perform operations including completing GBA procedures to obtain a second (i.e., new) session key Ks from the BSF based on the new B-TID, replying to the UE (e.g., with a ServerHello message) indicating the selected GBA method, and beginning communicating with the UE using the new Ks. Means for performing the operations of block 616 may include the processor 210, 212, 214, 216, 218, 252, 260 and the transceiver 256, 266.

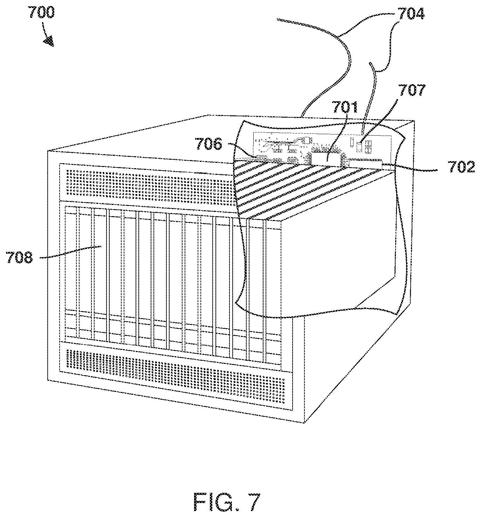

FIG. 7 is a component block diagram of a network device 700 (e.g., an NAF server) suitable for use with various embodiments. Such network devices (e.g., the network device 142a, 350) may include at least the components illustrated in FIG. 7. With reference to FIGS. 1A-7, the network device 700 may typically include a processor 701 coupled to volatile memory 702 and a large capacity nonvolatile memory, such as a disk drive 708. The network device 700 also may include a peripheral memory access device 706 such as a floppy disc drive, compact disc (CD) or digital video disc (DVD) drive coupled to the processor 701. The network device 700 also may include network access ports 704 (or interfaces) coupled to the processor 701 for establishing data connections with a network, such as the Internet or a local area network coupled to other system computers and servers. The network device 700 may include one or more antennas 707 for sending and receiving electromagnetic radiation that may be connected to a wireless communication link. The network device 700 may include additional access ports, such as USB, Firewire, Thunderbolt, and the like for coupling to peripherals, external memory, or other devices.

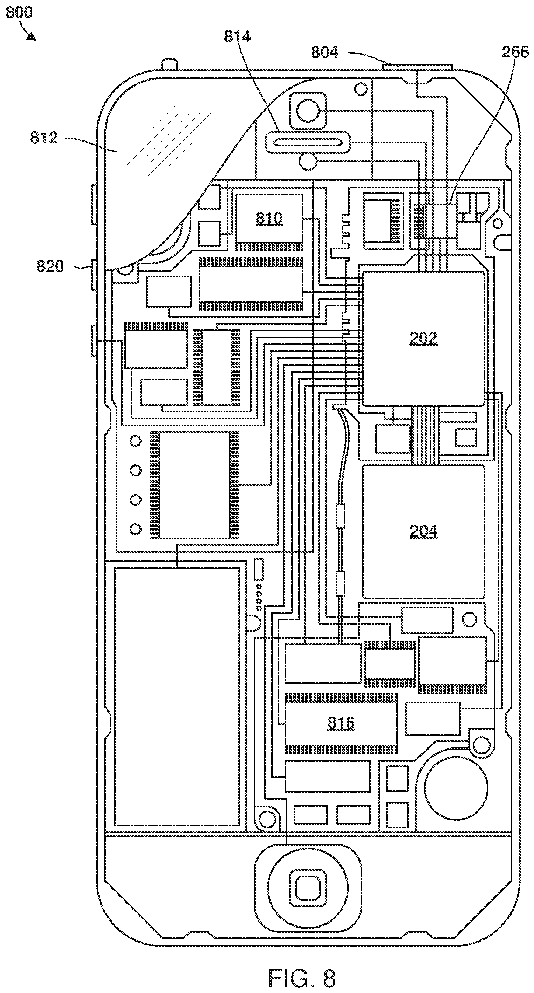

FIG. 8 is a component block diagram of a UE 800 suitable for use with various embodiments. With reference to FIGS. 1A-8, various embodiments may be implemented on a variety of UEs 800 (for example, the UEs 120a-120e, 320, 402), an example of which is illustrated in FIG. 8 in the form of a smartphone. The UE 800 may include a first SOC 202 (for example, a SOC-CPU) coupled to a second SOC 204 (for example, a 5G capable SOC). The first and second SOCs 202, 204 may be coupled to internal memory 816, a display 812, and to a speaker 814. Additionally, the UE 800 may include an antenna 804 for sending and receiving electromagnetic radiation that may be connected to a wireless transceiver 266 coupled to one or more processors in the first and/or second SOCs 202, 204. The UE 800 may include menu selection buttons or rocker switches 820 for receiving user inputs.

The UE 800 may include a sound encoding/decoding (CODEC) circuit 810, which digitizes sound received from a microphone into data packets suitable for wireless transmission and decodes received sound data packets to generate analog signals that are provided to the speaker to generate sound. One or more of the processors in the first and second SOCs 202, 204, wireless transceiver 266 and CODEC 810 may include a digital signal processor (DSP) circuit (not shown separately).

The processors of the network device 700 and the UE 800 may be any programmable microprocessor, microcomputer or multiple processor chip or chips that can be configured by software instructions (applications) to perform a variety of functions, including the functions of some implementations described below. In some UEs, multiple processors may be provided, such as one processor within an SOC 204 dedicated to wireless communication functions and one processor within an SOC 202 dedicated to running other applications. Software applications may be stored in the memory 702, 816 before they are accessed and loaded into the processor. The processors may include internal memory sufficient to store the application software instructions.

As used in this application, the terms "component," "module," "system," and the like are intended to include a computer-related entity, such as, but not limited to, hardware, firmware, a combination of hardware and software, software, or software in execution, which are configured to perform particular operations or functions. For example, a component may be, but is not limited to, a process running on a processor, a processor, an object, an executable, a thread of execution, a program, or a computer. By way of illustration, both an application running on a UE and the UE may be referred to as a component. One or more components may reside within a process or thread of execution and a component may be localized on one processor or core or distributed between two or more processors or cores. In addition, these components may execute from various non-transitory computer readable media having various instructions or data structures stored thereon. Components may communicate by way of local or remote processes, function or procedure calls, electronic signals, data packets, memory read/writes, and other known network, computer, processor, or process related communication methodologies.

A number of different cellular and mobile communication services and standards are available or contemplated in the future, all of which may implement and benefit from the various embodiments. Such services and standards include, e.g., third generation partnership project (3GPP), long term evolution (LTE) systems, third generation wireless mobile communication technology (3G), fourth generation wireless mobile communication technology (4G), fifth generation wireless mobile communication technology (5G) as well as later generation 3GPP technology, global system for mobile communications (GSM), universal mobile telecommunications system (UMTS), 3GSM, general packet radio service (GPRS), code division multiple access (CDMA) systems (e.g., cdmaOne, CDMA1020TM), enhanced data rates for GSM evolution (EDGE), advanced mobile phone system (AMPS), digital AMPS (IS-136/TDMA), evolution-data optimized (EV-DO), digital enhanced cordless telecommunications (DECT), Worldwide Interoperability for Microwave Access (WiMAX), wireless local area network (WLAN), Wi-Fi Protected Access I & II (WPA, WPA2), and integrated digital enhanced network (iDEN). Each of these technologies involves, for example, the transmission and reception of voice, data, signaling, and/or content messages. It should be understood that any references to terminology and/or technical details related to an individual telecommunication standard or technology are for illustrative purposes only, and are not intended to limit the scope of the claims to a particular communication system or technology unless specifically recited in the claim language.

Various embodiments illustrated and described are provided merely as examples to illustrate various features of the claims. However, features shown and described with respect to any given embodiment are not necessarily limited to the associated embodiment and may be used or combined with other embodiments that are shown and described. Further, the claims are not intended to be limited by any one example embodiment. For example, one or more of the methods and operations described herein may be substituted for or combined with one or more operations of the methods and operations.

The foregoing method descriptions and the process flow diagrams are provided merely as illustrative examples and are not intended to require or imply that the operations of various embodiments must be performed in the order presented. As will be appreciated by one of skill in the art the order of operations in the foregoing embodiments may be performed in any order. Words such as "thereafter," "then," "next," etc. are not intended to limit the order of the operations; these words are used to guide the reader through the description of the methods. Further, any reference to claim elements in the singular, for example, using the articles "a," "an," or "the" is not to be construed as limiting the element to the singular.

Various illustrative logical blocks, modules, components, circuits, and algorithm operations described in connection with the embodiments disclosed herein may be implemented as electronic hardware, computer software, or combinations of both. To clearly illustrate this interchangeability of hardware and software, various illustrative components, blocks, modules, circuits, and operations have been described above generally in terms of their functionality. Whether such functionality is implemented as hardware or software depends upon the particular application and design constraints imposed on the overall system. Skilled artisans may implement the described functionality in varying ways for each particular application, but such embodiment decisions should not be interpreted as causing a departure from the scope of the claims.

The hardware used to implement various illustrative logics, logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but, in the alternative, the processor may be any conventional processor, controller, microcontroller, or state machine. A processor may also be implemented as a combination of receiver smart objects, e.g., a combination of a DSP and a microprocessor, a plurality of microprocessors, one or more microprocessors in conjunction with a DSP core, or any other such configuration. Alternatively, some operations or methods may be performed by circuitry that is specific to a given function.

In one or more embodiments, the functions described may be implemented in hardware, software, firmware, or any combination thereof. If implemented in software, the functions may be stored as one or more instructions or code on a non-transitory computer-readable storage medium or non-transitory processor-readable storage medium. The operations of a method or algorithm disclosed herein may be embodied in a processor-executable software module or processor-executable instructions, which may reside on a non-transitory computer-readable or processor-readable storage medium. Non-transitory computer-readable or processor-readable storage media may be any storage media that may be accessed by a computer or a processor. By way of example but not limitation, such non-transitory computer-readable or processor-readable storage media may include RAM, ROM, EEPROM, FLASH memory, CD-ROM or other optical disk storage, magnetic disk storage or other magnetic storage smart objects, or any other medium that may be used to store desired program code in the form of instructions or data structures and that may be accessed by a computer. Disk and disc, as used herein, includes compact disc (CD), laser disc, optical disc, digital versatile disc (DVD), floppy disk, and Blu-ray disc where disks usually reproduce data magnetically, while discs reproduce data optically with lasers. Combinations of the above are also included within the scope of non-transitory computer-readable and processor-readable media. Additionally, the operations of a method or algorithm may reside as one or any combination or set of codes and/or instructions on a non-transitory processor-readable storage medium and/or computer-readable storage medium, which may be incorporated into a computer program product.

## Claims

1. A method (500) performed by a user equipment, UE, comprising:
generating (504) a first request message including:
a first bootstrapping transaction identifier B-TID;
a first pre-shared key, PSK, identity including a prefix indicating a PSK namespace, the PSK namespace identifying a first bootstrapping procedure supported by the UE; and
a first correlated PSK identity including a prefix indicating a correlated PSK namespace, the correlated PSK namespace indicating PSK renegotiation is supported by the UE for the first bootstrapping procedure; and
sending (506) the first request message to a Network Application Function, NAF.

2. The method of claim 1, further comprising:
receiving a response message from the NAF including an indication of the first correlated PSK namespace; and
performing a bootstrapping procedure to obtain a second B-TID and a session key, Ks, based on receiving the response message.

3. The method of claim 2, wherein performing the bootstrapping procedure comprises re-performing the first bootstrapping procedure to obtain the second B-TID and second session key, Ks.

4. The method of claim 2, further comprising:
generating a second request message including the second B-TID and the first correlated PSK namespace; and
sending the second request message to the NAF.

5. The method of claim 2, wherein the indication of the first correlated PSK namespace is the first correlated PSK namespace.

6. The method of claim 2, wherein the indication of the first correlated PSK namespace is an index of the first correlated PSK namespace or a position of the first correlated PSK namespace in a list.

7. The method of claim 2, further comprising:
communicating with the NAF using the second Ks.

8. The method of claim 1, wherein the first request message further includes:
a second PSK namespace identifying a second bootstrapping procedure supported by the UE; and
a second correlated PSK namespace indicating PSK renegotiation is supported by the UE for the second bootstrapping procedure.

9. The method of claim 1, wherein the first request message is a client-initiated hello message.

10. A method (600) performed by a network device, comprising:
receiving (602), by the network device from a user equipment, UE, a first request message including:
a first bootstrapping transaction identifier, B-TID;
a first pre-shared key, PSK, identity including a prefix indicating a PSK namespace, the PSK namespace identifying a first bootstrapping procedure supported by the UE; and
a first correlated PSK identity including a prefix indicating a correlated PSK namespace, the correlated PSK namespace indicating PSK renegotiation is supported by the UE for the first bootstrapping procedure;
determining PSK renegotiation is required for the UE after receiving the first request message;
determining (608) an indication of the first correlated PSK namespace in response to determining PSK renegotiation is required for the UE;
generating (610) a response message including the indication of the first correlated PSK namespace; and
sending (612) the response message to the UE.

11. A user equipment, UE, (120a-120e, 320, 402, 800) comprising:
a transceiver (256, 266); and
a processor (210, 212, 214, 216, 218, 252, 260) coupled to the transceiver and configured to:
generate a first request message including:
a first bootstrapping transaction identifier, B-TID;
a first pre-shared key, PSK, identity including a prefix indicating a PSK namespace, the PSK namespace identifying a first bootstrapping procedure supported by the UE; and
a first correlated PSK identity including a prefix indicating a correlated PSK namespace, the correlated PSK namespace indicating PSK renegotiation is supported by the UE for the first bootstrapping procedure; and
send the first request message to a Network Application Function, NAF, via the transceiver.

12. The UE of claim 11, wherein the processor is further configured to:
receive a response message from the NAF including an indication of the first correlated PSK namespace; and
perform a bootstrapping procedure to obtain a second B-TID and a session key, Ks, based on receiving the response message.

13. The UE of claim 12, wherein the processor is further configured to perform another bootstrapping procedure by re-performing the first bootstrapping procedure to obtain the second B-TID and second session key, Ks.

14. A network device (350), comprising:
a processor configured to perform operations to:
receive, from a user equipment, UE, a first request message including:
a first bootstrapping transaction identifier, B-TID;
a first pre-shared key, PSK, identity including a prefix indicating a PSK namespace, the PSK namespace identifying a first bootstrapping procedure supported by the UE; and
a first correlated PSK identity including a prefix indicating a correlated PSK namespace, the PSK namespace indicating PSK renegotiation is supported by the UE for the first bootstrapping procedure;
determine PSK renegotiation is required for the UE after receiving the first request message;
determine an indication of a PSK renegotiation for the first correlated PSK namespace in response to determining PSK renegotiation is required for the UE;
generate a response message including the indication of the first correlated PSK namespace; and
send the response message to the UE.

15. A non-transitory, processor-readable medium (220) having stored thereon processor-executable instructions configured to cause a processor (210, 212, 214, 216, 218, 252, 260) of a user equipment, UE, (120a-120e, 320, 402, 800) to perform operations comprising:
generating a first request message including:
a first bootstrapping transaction identifier, B-TID;
a first pre-shared key, PSK, identity including a prefix indicating a PSK namespace, the PSK namespace identifying a first bootstrapping procedure supported by the UE; and
a first correlated PSK identity including a prefix indicating a correlated PSK namespace, the correlated PSK namespace indicating PSK renegotiation is supported by the UE for the first bootstrapping procedure; and
sending the first request message to a Network Application Function, NAF.

## Patentansprüche

1. Verfahren (500), das durch eine Benutzerausrüstung, UE, durchgeführt wird, umfassend:
Erzeugen (504) einer ersten Anforderungsnachricht, einschließlich:
einer ersten Bootstrapping-Transaktionskennung B-TID;
einer ersten Identität für einen vorab geteilten Schlüssel, PSK, die ein Präfix einschließt, das einen PSK-Namensraum angibt, wobei der PSK-Namensraum eine erste Bootstrapping-Prozedur identifiziert, die durch die UE unterstützt wird; und
einer ersten korrelierten PSK-Identität, die ein Präfix einschließt, das einen korrelierten PSK-Namensraum angibt, wobei der korrelierte PSK-Namensraum angibt, dass eine PSK-Neuverhandlung durch die UE für die erste Bootstrapping-Prozedur unterstützt wird; und
Senden (506) der ersten Anforderungsnachricht an eine Netzwerkanwendungsfunktion, NAF.

2. Verfahren nach Anspruch 1, weiter umfassend:
Empfangen einer Antwortnachricht von der NAF, die eine Angabe des ersten korrelierten PSK-Namensraums einschließt; und
Durchführen einer Bootstrapping-Prozedur, um eine zweite B-TID und einen Sitzungsschlüssel, Ks, zu erhalten, basierend auf dem Empfangen der Antwortnachricht.

3. Verfahren nach Anspruch 2, wobei das Durchführen der Bootstrapping-Prozedur erneutes Durchführen der ersten Bootstrapping-Prozedur umfasst, um die zweite B-TID und den zweiten Sitzungsschlüssel, Ks, zu erhalten.

4. Verfahren nach Anspruch 2, weiter umfassend:
Erzeugen einer zweiten Anforderungsnachricht, die die zweite B-TID und den ersten korrelierten PSK-Namensraum einschließt; und
Senden der zweiten Anforderungsnachricht an die NAF.

5. Verfahren nach Anspruch 2, wobei die Angabe des ersten korrelierten PSK-Namensraums der erste korrelierte PSK-Namensraum ist.

6. Verfahren nach Anspruch 2, wobei die Angabe des ersten korrelierten PSK-Namensraums ein Index des ersten korrelierten PSK-Namensraums oder eine Position des ersten korrelierten PSK-Namensraums in einer Liste ist.

7. Verfahren nach Anspruch 2, weiter umfassend:
Kommunizieren mit der NAF unter Verwendung des zweiten Ks.

8. Verfahren nach Anspruch 1, wobei die erste Anforderungsnachricht weiter einschließt:
einen zweiten PSK-Namensraum, der eine zweite Bootstrapping-Prozedur identifiziert, die durch die UE unterstützt wird; und
einen zweiten korrelierten PSK-Namensraum, der angibt, dass eine PSK-Neuverhandlung durch die UE für die zweite Bootstrapping-Prozedur unterstützt wird.

9. Verfahren nach Anspruch 1, wobei die erste Anforderungsnachricht eine von einem Client eingeleitete Hallo-Nachricht ist.

10. Verfahren (600), das durch eine Netzwerkvorrichtung durchgeführt wird, umfassend:
Empfangen (602) einer ersten Anforderungsnachricht durch die Netzwerkvorrichtung von einer Benutzerausrüstung, UE, einschließlich:
einer ersten Bootstrapping-Transaktionskennung, B-TID;
einer ersten Identität für einen vorab geteilten Schlüssel, PSK, die ein Präfix einschließt, das einen PSK-Namensraum angibt, wobei der PSK-Namensraum eine erste Bootstrapping-Prozedur identifiziert, die durch die UE unterstützt wird; und
einer ersten korrelierten PSK-Identität, die ein Präfix einschließt, das einen korrelierten PSK-Namensraum angibt, wobei der korrelierte PSK-Namensraum angibt, dass eine PSK-Neuverhandlung durch die UE für die erste Bootstrapping-Prozedur unterstützt wird;
Bestimmen, ob für die UE eine PSK-Neuverhandlung erforderlich ist, nach dem Empfangen der ersten Anforderungsnachricht;
Bestimmen (608) einer Angabe des ersten korrelierten PSK-Namensraums als Reaktion auf Bestimmen, dass für die UE eine PSK-Neuverhandlung erforderlich ist;
Erzeugen (610) einer Antwortnachricht, die die Angabe des ersten korrelierten PSK-Namensraums einschließt; und
Senden (612) der Antwortnachricht an die UE.

11. Benutzerausrüstung, UE, (120a-120e, 320, 402, 800), umfassend:
einen Sendeempfänger (256, 266); und
einen Prozessor (210, 212, 214, 216, 218, 252, 260), der an den Sendeempfänger gekoppelt ist, und
der ausgebildet ist zum:
Erzeugen einer ersten Anforderungsnachricht, einschließlich:
einer ersten Bootstrapping-Transaktionskennung, B-TID;
einer ersten Identität für einen vorab geteilten Schlüssel, PSK, die ein Präfix einschließt, das einen PSK-Namensraum angibt, wobei der PSK-Namensraum eine erste Bootstrapping-Prozedur identifiziert, die durch die UE unterstützt wird; und
einer ersten korrelierten PSK-Identität, die ein Präfix einschließt, das einen korrelierten PSK-Namensraum angibt, wobei der korrelierte PSK-Namensraum angibt, dass eine PSK-Neuverhandlung durch die UE für die erste Bootstrapping-Prozedur unterstützt wird; und
Senden der ersten Anforderungsnachricht an eine Netzwerkanwendungsfunktion, NAF, über den Sendeempfänger.

12. UE nach Anspruch 11, wobei der Prozessor weiter ausgebildet ist zum:
Empfangen einer Antwortnachricht von der NAF, die eine Angabe des ersten korrelierten PSK-Namensraums einschließt; und
Durchführen einer Bootstrapping-Prozedur, um eine zweiten B-TID und einen Sitzungsschlüssel, Ks, zu erhalten, basierend auf dem Empfangen der Antwortnachricht.

13. UE nach Anspruch 12, wobei der Prozessor weiter dazu ausgebildet ist, eine weitere Bootstrapping-Prozedur durchzuführen, indem er die erste Bootstrapping-Prozedur erneut durchführt, um die zweite B-TID und den zweiten Sitzungsschlüssel, Ks, zu erhalten.

14. Netzwerkvorrichtung (350), umfassend:
einen Prozessor, der dazu ausgebildet ist, Operationen durchzuführen zum:
Empfangen einer ersten Anforderungsnachricht von einer Benutzerausrüstung, UE, einschließlich:
einer ersten Bootstrapping-Transaktionskennung, B-TID;
einer ersten Identität für einen vorab geteilten Schlüssel, PSK, die ein Präfix einschließt, das einen PSK-Namensraum angibt, wobei der PSK-Namensraum eine erste Bootstrapping-Prozedur identifiziert, die durch die UE unterstützt wird; und
eine erste korrelierte PSK-Identität, die ein Präfix einschließt, das einen korrelierten PSK-Namensraum angibt, wobei der PSK-Namensraum angibt, dass eine PSK-Neuverhandlung durch die UE für die erste Bootstrapping-Prozedur unterstützt wird;
Bestimmen, ob für die UE eine PSK-Neuverhandlung erforderlich ist, nach dem Empfangen der ersten Anforderungsnachricht;
Bestimmen einer Angabe einer PSK-Neuverhandlung für den ersten korrelierten PSK-Namensraum als Reaktion auf Bestimmen, dass für die UE eine PSK-Neuverhandlung erforderlich ist;
Erzeugen einer Antwortnachricht, die die Angabe des ersten korrelierten PSK-Namensraums einschließt; und
Senden der Antwortnachricht an die UE.

15. Nichttransitorisches, prozessorlesbares Medium (220), auf dem prozessorausführbare Befehle gespeichert sind, die dazu ausgebildet sind, einen Prozessor (210, 212, 214, 216, 218, 252, 260) einer Benutzerausrüstung, UE, (120a - 120e, 320, 402, 800) dazu zu veranlassen, Operationen durchzuführen, umfassend:
Erzeugen einer ersten Anforderungsnachricht, einschließlich:
einer ersten Bootstrapping-Transaktionskennung, B-TID;
einer ersten Identität für einen vorab geteilten Schlüssel, PSK, die ein Präfix einschließt, das einen PSK-Namensraum angibt, wobei der PSK-Namensraum eine erste Bootstrapping-Prozedur identifiziert, die durch die UE unterstützt wird; und
einer ersten korrelierten PSK-Identität, die ein Präfix einschließt, das einen korrelierten PSK-Namensraum angibt, wobei der korrelierte PSK-Namensraum angibt, dass eine PSK-Neuverhandlung durch die UE für die erste Bootstrapping-Prozedur unterstützt wird; und
Senden der ersten Anforderungsnachricht an eine Netzwerkanwendungsfunktion, NAF.

## Revendications

1. Procédé (500) réalisé par un équipement utilisateur, UE, comprenant :
la génération (504) d'un premier message de requête incluant :
un premier identifiant de transaction de démarrage B-TID ;
une première identité de clé prépartagée, PSK, incluant un préfixe indiquant un espace de noms PSK, l'espace de noms PSK identifiant une première procédure de démarrage prise en charge par l'UE ; et
une première identité PSK corrélée incluant un préfixe indiquant un espace de noms PSK corrélé, l'espace de noms PSK corrélé indiquant qu'une renégociation PSK est prise en charge par l'UE pour la première procédure de démarrage ; et
l'envoi (506) du premier message de requête à une fonction d'application réseau, NAF.

2. Procédé selon la revendication 1, comprenant en outre :
la réception d'un message de réponse à partir de la NAF incluant une indication du premier espace de noms PSK corrélé ; et
la réalisation d'une procédure de démarrage pour obtenir un deuxième B-TID et une clé de session, Ks, sur la base de la réception du message de réponse.

3. Procédé selon la revendication 2, dans lequel la réalisation de la procédure de démarrage comprend la réexécution de la première procédure de démarrage pour obtenir le deuxième B-TID et la deuxième clé de session, Ks.

4. Procédé selon la revendication 2, comprenant en outre :
la génération d'un deuxième message de requête incluant le deuxième B-TID et le premier espace de noms PSK corrélé ; et
l'envoi du deuxième message de requête à la NAF.

5. Procédé selon la revendication 2, dans lequel l'indication du premier espace de noms PSK corrélé est le premier espace de noms PSK corrélé.

6. Procédé selon la revendication 2, dans lequel l'indication du premier espace de noms PSK corrélé est un indice du premier espace de noms PSK corrélé ou une position du premier espace de noms PSK corrélé dans une liste.

7. Procédé selon la revendication 2, comprenant en outre :
la communication avec la NAF en utilisant la deuxième Ks.

8. Procédé selon la revendication 1, dans lequel le premier message de requête inclut en outre :
un deuxième espace de noms PSK identifiant une deuxième procédure de démarrage prise en charge par l'UE ; et
un deuxième espace de noms PSK corrélé indiquant qu'une renégociation PSK est prise en charge par l'UE pour la seconde procédure de démarrage.

9. Procédé selon la revendication 1, dans lequel le premier message de requête est un message de bienvenue initié par le client.

10. Procédé (600) réalisé par un dispositif de réseau, comprenant :
la réception (602), par le dispositif de réseau à partir d'un équipement utilisateur, UE, d'un premier message de requête incluant :
un premier identifiant de transaction de démarrage, B-TID ;
une première identité de clé prépartagée, PSK, incluant un préfixe indiquant un espace de noms PSK, l'espace de noms PSK identifiant une première procédure de démarrage prise en charge par l'UE ; et
une première identité PSK corrélée incluant un préfixe indiquant un espace de noms PSK corrélé, l'espace de noms PSK corrélé indiquant qu'une renégociation PSK est prise en charge par l'UE pour la première procédure de démarrage ;
la détermination si une renégociation PSK est requise pour l'UE après réception du premier message de requête ;
la détermination (608) d'une indication du premier espace de noms PSK corrélé en réponse à la détermination qu'une renégociation PSK est requise pour l'UE ;
la génération (610) d'un message de réponse incluant l'indication du premier espace de noms PSK corrélé ; et
l'envoi (612) du message de réponse à l'UE.

11. Équipement utilisateur, UE, (120a-120e, 320, 402, 800) comprenant :
un émetteur-récepteur (256, 266) ; et
un processeur (210, 212, 214, 216, 218, 252, 260) couplé à l'émetteur-récepteur et configuré pour :
générer un premier message de requête incluant :
un premier identifiant de transaction de démarrage, B-TID ;
une première identité de clé prépartagée, PSK, incluant un préfixe indiquant un espace de noms PSK, l'espace de noms PSK identifiant une première procédure de démarrage prise en charge par l'UE ; et
une première identité PSK corrélée incluant un préfixe indiquant un espace de noms PSK corrélé, l'espace de noms PSK corrélé indiquant qu'une renégociation PSK est prise en charge par l'UE pour la première procédure de démarrage ; et
envoyer le premier message de requête à une fonction d'application réseau, NAF, via l'émetteur-récepteur.

12. UE selon la revendication 11, dans lequel le processeur est en outre configuré pour :
recevoir un message de réponse à partir de la NAF incluant une indication du premier espace de noms PSK corrélé ; et
réaliser une procédure de démarrage pour obtenir un deuxième B-TID et une clé de session, Ks, sur la base de la réception du message de réponse.

13. UE selon la revendication 12, dans lequel le processeur est en outre configuré pour réaliser une autre procédure de démarrage en réalisant à nouveau la première procédure de démarrage pour obtenir le deuxième B-TID et la deuxième clé de session, Ks.

14. Dispositif de réseau (350), comprenant :
un processeur configuré pour réaliser des opérations pour :
recevoir, à partir d'un équipement utilisateur, UE, un premier message de requête incluant :
un premier identifiant de transaction de démarrage, B-TID ;
une première identité de clé prépartagée, PSK, incluant un préfixe indiquant un espace de noms PSK, l'espace de noms PSK identifiant une première procédure de démarrage prise en charge par l'UE ; et
une première identité PSK corrélée incluant un préfixe indiquant un espace de noms PSK corrélé, l'espace de noms PSK indiquant qu'une renégociation PSK est prise en charge par l'UE pour la première procédure de démarrage ;
déterminer qu'une renégociation PSK est requise pour l'UE après réception du premier message de requête ;
déterminer une indication d'une renégociation PSK pour le premier espace de noms PSK corrélé en réponse à la détermination qu'une renégociation PSK est requise pour l'UE ;
générer un message de réponse incluant l'indication du premier espace de noms PSK corrélé ; et
envoyer le message de réponse à l'UE.

15. Support (220) non transitoire lisible par processeur présentant stocké sur celui-ci des instructions exécutables par processeur configurées pour amener un processeur (210, 212, 214, 216, 218, 252, 260) d'un équipement utilisateur, UE, (120a-120e, 320, 402, 800) à réaliser des opérations comprenant :
la génération d'un premier message de requête incluant :
un premier identifiant de transaction de démarrage, B-TID ;
une première identité de clé prépartagée, PSK, incluant un préfixe indiquant un espace de noms PSK, l'espace de noms PSK identifiant une première procédure de démarrage prise en charge par l'UE ; et
une première identité PSK corrélée incluant un préfixe indiquant un espace de noms PSK corrélé, l'espace de noms PSK corrélé indiquant qu'une renégociation PSK est prise en charge par l'UE pour la première procédure de démarrage ; et
l'envoi du premier message de requête à une fonction d'application réseau, NAF.
